(19) Europäisches Patentamt
European Patent Office
Office européen des brevets

(11) EP 3 009 473 B1

(12) **EUROPEAN PATENT SPECIFICATION**

(45) Date of publication and mention of the grant of the patent:
**14.03.2018 Bulletin 2018/11**

(51) Int Cl.:
***C08L 21/00*** *(2006.01)* ***B29C 73/22*** *(2006.01)*
***B29D 30/00*** *(2006.01)*

(21) Application number: **15190187.3**

(22) Date of filing: **16.10.2015**

(54) **RUBBER COMPOSITION FOR PNEUMATIC TIRE**

KAUTSCHUKZUSAMMENSETZUNG FÜR LUFTREIFEN

COMPOSITION DE CAOUTCHOUC POUR PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.10.2014 JP 2014212950**
**01.12.2014 JP 2014243396**

(43) Date of publication of application:
**20.04.2016 Bulletin 2016/16**

(73) Proprietor: **SUMITOMO RUBBER INDUSTRIES, LTD.**
**Kobe-shi, Hyogo-ken, 651-0072 (JP)**

(72) Inventors:
- **SUGIMOTO, Mutsuki**
  **Kobe-shi, Hyogo 651-0072 (JP)**
- **YUKAWA, Naoki**
  **Kobe-shi, Hyogo 651-0072 (JP)**
- **YAMADA, Satoshi**
  **Kobe-shi, Hyogo 651-0072 (JP)**

(74) Representative: **Manitz Finsterwald Patentanwälte PartmbB**
**Martin-Greif-Strasse 1**
**80336 München (DE)**

(56) References cited:
**EP-A1- 2 060 414** **EP-A2- 0 942 043**
**EP-A2- 1 533 108**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to a rubber composition for pneumatic tires and a pneumatic tire including the rubber composition.

BACKGROUND ART

Self-sealing tires which contain a sealant applied to the inner periphery thereof have been known as puncture resistant pneumatic tires (hereinafter, pneumatic tires are also referred to simply as tires) . The sealant automatically seals a puncture hole formed in such self-sealing tires.

Several methods have been known for producing self-sealing tires, including, for example, a method that includes adding an organic solvent to a sealant to reduce the viscosity of the sealant so as to be easy to handle, attaching the diluted sealant to the inner surface of a tire, and removing the organic solvent from the attached diluted sealant; or a method that includes mixing a base agent prepared in a batch kneader with a curing agent using a static mixer or dynamic mixer to prepare a sealant, and attaching the sealant to the inner periphery of a tire (see for example Patent Literature 1).

Patent Literature 2 discloses a method in which a sealant is attached to the inner periphery of a tire by pressing using a press roller.

CITATION LIST

PATENT LITERATURE

Patent Literature 1: JP 2010-528131 T
Patent Literature 2: JP 2001-18609 A

SUMMARY OF INVENTION

TECHNICAL PROBLEM

Several studies have been made on the methods for producing self-sealing tires as disclosed in Patent Literatures 1 and 2. However, none of them investigate the details of the formulation of the sealant. In this context, the present inventors have found that in some self-sealing tires in which a sealant is applied on the inner periphery of the tire, the applied sealant can flow over the inner periphery of the self-sealing tire during running and as a result, the amount of the sealant on the inner periphery of the self-sealing tire may partly become insufficient (the sealant layer may partly become thin). Thus, the present inventors have found out that sealants are required not to flow excessively even at high temperatures during running but to flow to an extent that allows good sealing performance to be exhibited when a tire is punctured, and also flow to an extent that allows good sealing performance to be exhibited even at low temperatures, for example, in winter.

The present invention aims to solve the above problems and provide a rubber composition for self-sealing tires having a good balance of excellent sealing performance and excellent fluidity, and a self-sealing tire including the rubber composition.

SOLUTION TO PROBLEM

The present invention relates to a rubber composition for pneumatic tires, having a viscosity at 0°C of 16 to 80 kPa·s and a viscosity at 95°C of 1 to 15 kPa·s,, wherein the viscosity at 0 °C and at 95 °C is measured with a rheometer MCR 52 available from Anton Paar Japan K.K. with a measurement mode of steady flow shear viscosity at 0 °C and 95 °C, respectively, for 15 seconds using a measurement strain of 0 % to 10,000 % with a shear rate of 6 (1/s), with a preheating time of one minute after an insertion between plates heated at a set temperature using a circular plate as rotor shape and adjusting an 1 mm distance between plates using no extruded sealant.

Preferably, an absolute value of a difference between the viscosity at 0°C and the viscosity at 95°C of the rubber composition is 1 to 79 kPa·s.

The rubber composition preferably contains a rubber component including a butyl-based rubber and an organic peroxide.

An amount of the butyl-based rubber based on 100% by mass of the rubber component is preferably 80% by mass or more.

The rubber composition preferably contains, relative to 100 parts by mass of the rubber component, 1 to 40 parts by mass of the organic peroxide and 1 to 40 parts by mass of a crosslinking activator.

The crosslinking activator is preferably a quinone dioxime compound.

The butyl-based rubber is preferably a halogenated butyl rubber.

The halogenated butyl rubber is preferably brominated butyl rubber.

The rubber composition preferably contains 100 to 400 parts by mass of a liquid polymer relative to 100 parts by mass of the rubber component.

The liquid polymer is preferably liquid polybutene.

The present invention also relates to a pneumatic tire, including a sealant layer formed from the rubber composition.

## ADVANTAGEOUS EFFECTS OF INVENTION

The rubber composition for pneumatic tires of the present invention has viscosities at 0°C and 95°C each falling within a predetermined range. With such a rubber composition, a sealant having a good balance of excellent sealing performance and excellent fluidity can be provided.

## BRIEF DESCRIPTION OF DRAWINGS

Fig. 1 is an explanatory view schematically showing an example of an applicator used in a method for producing a self-sealing tire of the present invention.
Fig. 2 is an enlarged view showing the vicinity of the tip of a nozzle provided with the applicator shown in Fig. 1.
Fig. 3 is an explanatory view schematically showing the positional relationship of the nozzle to the tire.
Fig. 4 is an explanatory view schematically showing an example of a generally string-shaped sealant continuously and spirally attached to the inner periphery of the tire.
Figs. 5 are enlarged views showing the vicinity of the tip of a nozzle provided with the applicator shown in Fig. 1.
Fig. 6 is an explanatory view schematically showing an example of a sealant attached to a self-sealing tire.
Fig. 7 is an explanatory view schematically showing an example of a production facility used in a method for producing a self-sealing tire.
Fig. 8 is an explanatory view schematically showing an example of a cross section of the sealant shown in Fig. 4 when the sealant is cut along the A-A straight line orthogonal to the direction along which the sealant is applied (the longitudinal direction).
Fig. 9 is an explanatory view schematically showing an example of a cross section of a pneumatic tire.

## DESCRIPTION OF EMBODIMENTS

The rubber composition for pneumatic tires of the present invention (rubber composition for self-sealing tires, sealant) has a viscosity at 0°C of 16 to 80 kPa·s and a viscosity at 95°C of 1 to 15 kPa·s.

By adjusting the sealant viscosities at 0°C and 95°C within the above respective ranges, a sealant having a good balance of excellent sealing performance and excellent fluidity can be provided which does not flow excessively even at high temperatures during running but flows to an extent that allows good sealing performance to be exhibited when a tire is punctured, and also flows to an extent that allows good sealing performance to be exhibited even at low temperatures, for example, in winter.

The rubber composition of the present invention has a viscosity at 0°C of 16 to 80 kPa·s. The viscosity at 0°C falling within the above range ensures moderate fluidity so that good sealing performance can be exhibited even at low temperatures, for example, in winter. The viscosity at 0°C is preferably 20 kPa·s or higher, more preferably 25 kPa·s or higher. Also, the viscosity at 0°C is preferably 60 kPa·s or lower, more preferably 40 kPa·s or lower, still more preferably 35 kPa·s or lower.

Herein, the viscosity at 0°C is determined by measuring steady flow shear viscosity at 0°C using a rheometer. Specifically, the viscosity can be measured according to a method described later in the examples.

The rubber composition of the present invention has a viscosity at 95°C of 1 to 15 kPa·s. The viscosity at 95°C falling within the above range avoids excessive flowing even at high temperatures during running but ensures moderate fluidity so that good sealing performance can be exhibited when a tire is punctured. The viscosity at 95°C is preferably 5 kPa·s or higher, more preferably 8 kPa·s or higher, still more preferably 10 kPa·s or higher, while it is preferably 14 kPa·s or lower.

Herein, the viscosity at 95°C is determined by measuring steady flow shear viscosity at 95°C using a rheometer. Specifically, the viscosity can be measured according to a method described later in the examples.

The absolute value of the difference between the viscosity at 0°C and the viscosity at 95°C of the rubber composition of the present invention is preferably 1 to 79 kPa·s. When the absolute value of the difference between the viscosity at 0°C and the viscosity at 95°C is within the above range, the difference between the viscosity at low temperatures and the viscosity at high temperatures falls within a predetermined range, whereby a sealant with low temperature dependence can be obtained. Such a sealant has a better balance of excellent sealing performance and excellent fluidity. The absolute value of the difference between the viscosity at 0°C and the viscosity at 95°C is more preferably 5 kPa·s or higher, still more preferably 10 kPa·s or higher, further preferably 13 kPa·s or higher, particularly preferably 15 kPa·s or higher. Also, the absolute value of the difference is more preferably 75 kPa·s or lower, still more preferably 73 kPa·s or lower, further preferably 68 kPa·s or lower, particularly preferably 50 kPa·s or lower, most preferably 25 kPa·s or lower.

The rubber composition can have a viscosity at 0°C of 16 to 80 kPa·s and a viscosity at 95°C of 1 to 15 kPa·s when it is adjusted to have a predetermined formulation described later.

Moreover, it is generally known that the viscosities at 0°C and 95°C can each be controlled by adjusting the type or the amount of rubber component, reinforcing agent (filler), or crosslinking agent or crosslinking activator to be compounded into the rubber composition, and the type or the amount of liquid polymer if compounded into the rubber composition.

Basically, the viscosity at 0°C of the rubber composition is greatly affected by the molecular mobility of polymers in the rubber composition. Polymers having lower molecular mobility tend to result in higher viscosity. On the other hand, the viscosity at 95°C of the rubber composition is greatly affected by the level of crosslink density of the rubber component in the rubber composition. A rubber component having higher level of crosslink density tends to result in higher viscosity.

More specifically, as the amount of the rubber component, reinforcing agent (filler), crosslinking agent, or crosslinking activator is increased, both of the viscosities at 0°C and 95°C increase. As the amount of liquid polymer is increased, both of the viscosities at 0°C and 95°C decrease.

The rubber composition (sealant) for self-sealing tires of the present invention preferably contains a rubber component including a butyl-based rubber and an organic peroxide.

The sealant, which will be described in detail later, can have viscosities at 0°C and 95°C falling within the above respective ranges when it contains a butyl-based rubber and an organic peroxide, and especially when it contains a butyl-based rubber and specific amounts of an organic peroxide and a crosslinking activator, and further when it contains a halogenated butyl rubber (especially brominated butyl rubber) as the butyl-based rubber and a quinone dioxime compound as the crosslinking activator. In this case, a sealant having a good balance of excellent sealing performance and excellent fluidity can be provided.

Moreover, the sealant which has been mixed in a twin screw kneading extruder or the like and, further, in which the crosslinking reaction in the extruder is suppressed (controlled) can be directly applied to the inner surface of a tire. Furthermore, the crosslinking reaction begins upon the application (obviously the crosslinking reaction may have already proceeded to some extent) and the sealant is subjected to adhesion to the tire inner surface and the crosslinking reaction. Accordingly, the sealant can be applied and processed in a series of steps so that productivity is enhanced.

The rubber composition (sealant) for self-sealing tires of the present invention is applied to portions of the inner surface of self-sealing tires where a puncture hole may be formed, such as treads. The following will describe the sealant with reference to suitable examples of methods for producing a self-sealing tire.

According to the present invention, a pneumatic tire (self-sealing tire) can be produced, for example, by preparing a sealant by mixing the components of the sealant, and then attaching the sealant to the inner periphery of a tire by application or the like to form a sealant layer. The self-sealing tire includes the sealant layer located radially inside an innerliner.

The following describes suitable examples of methods for producing the self-sealing tire of the present invention.

According to the present invention, the self-sealing tire can be produced, for example, by preparing a sealant by mixing the components of the sealant, and then attaching the sealant to the inner periphery of a tire by application or the like to form a sealant layer. The self-sealing tire includes the sealant layer located radially inside an innerliner.

The hardness (viscosity) of the sealant needs to be controlled to an appropriate viscosity according to the service temperature by adjusting the rubber component and the degree of crosslinking. Then, the rubber component is controlled by adjusting the types or amounts of liquid rubber, plasticizer, and carbon black, while the degree of crosslinking is controlled by adjusting the types or amounts of crosslinking agent and crosslinking activator.

Any sealant having adhesiveness may be used, and rubber compositions conventionally used to seal punctures of tires can be used. The rubber component constituting a main ingredient of the rubber composition includes a butyl-based rubber. Examples of the butyl-based rubber include butyl rubber (IIR) and halogenated butyl rubbers (X-IIR) such as brominated butyl rubber (Br-IIR) or chlorinated butyl rubber (Cl-IIR). In particular, in view of fluidity and the like, either or both of butyl rubber and a halogenated butyl rubber can be suitably used. The butyl-based rubber to be used is preferably in the form of pellets. Such a pelletized butyl-based rubber can be precisely and suitably supplied to a continuous kneader so that the sealant can be produced with high productivity.

The butyl-based rubber is preferably a halogenated butyl rubber. The crosslinking reaction of halogenated butyl rubbers tends to proceed more easily than that of non-halogenated butyl rubber, so that crosslink density is more likely to increase. Thus, the use of a halogenated butyl rubber can increase the viscosity at 95°C, which in turn contributes to reduction in the difference between the viscosity at 0°C and the viscosity at 95°C and is preferred to provide a sealant with low temperature dependence. Further, brominated butyl rubber is particularly preferred because it has a greater effect in accelerating the crosslinking reaction.

To more suitably ensure sealing performance and fluidity for the sealant, the butyl-based rubber preferably has a Mooney viscosity $ML_{1+8}$ at 125°C of 20 to 60, more preferably 40 to 60. If the Mooney viscosity is less than 20, fluidity may be reduced. If the Mooney viscosity is more than 60, sealing performance may be reduced.

The Mooney viscosity $ML_{1+8}$ at 125°C is determined in conformity with JIS K-6300-1:2001 at a test temperature of 125°C using an L type rotor with a preheating time of one minute and a rotation time of eight minutes.

The halogenated butyl rubber preferably has a halogen content of 0.1 to 5.0% by mass, more preferably 0.5 to 4.0% by mass. In this case, a more suitable effect can be made in accelerating the crosslinking reaction and the effects of the present invention can be more suitably achieved.

The halogen content can be measured by solution NMR.

The amount of the butyl-based rubber based on 100% by mass of the rubber component is preferably 80% by mass or more, more preferably 90% by mass or more, and may be 100% by mass. In this case, the effects of the present invention can be more suitably achieved.

In addition to the above rubber material, other rubber materials may be used together as the rubber component. Examples include diene rubbers such as natural rubber (NR), polyisoprene rubber (IR), polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR) .

The sealant of the present invention preferably contains a liquid polymer.

Examples of the liquid polymer include liquid polybutene, liquid polyisobutene, liquid polyisoprene, liquid polybutadiene, liquid poly-$\alpha$-olefin, liquid isobutylene, liquid ethylene-$\alpha$-olefin copolymers, liquid ethylene-propylene copolymers, and liquid ethylene-butylene copolymers. To provide adhesion and the like, liquid polybutene is preferred among these. Examples of the liquid polybutene include copolymers having a long-chain hydrocarbon molecular structure based on isobutene which is further reacted with normal butene. Hydrogenated liquid polybutene may also be used.

To prevent the sealant from flowing during high-speed driving, the liquid polymer such as liquid polybutene to be used is preferably a liquid polymer A having a kinematic viscosity at 100°C of 550 to 625 $mm^2/s$ and/or a liquid polymer B having a kinematic viscosity at 100°C of 3,540 to 4,010 $mm^2/s$, more preferably a combination of the liquid polymer A and the liquid polymer B.

The kinematic viscosity at 100°C of the liquid polymer A such as liquid polybutene is preferably 550 $mm^2/s$ or higher, more preferably 570 $mm^2/s$ or higher. If the kinematic viscosity is lower than 550 $mm^2/s$, flowing of the sealant may occur. The kinematic viscosity at 100°C is preferably 625 $mm^2/s$ or lower, more preferably 610 $mm^2/s$ or lower. If the kinematic viscosity is higher than 625 $mm^2/s$, the sealant may have higher viscosity and deteriorated extrudability.

The kinematic viscosity at 100°C of the liquid polymer B such as liquid polybutene is preferably 3, 600 $mm^2/s$ or higher, more preferably 3,650 $mm^2/s$ or higher. If the kinematic viscosity is lower than 3,540 $mm^2/s$, the sealant may have too low a viscosity and readily flow during service of the tire, resulting in deterioration in sealing performance and uniformity.

The kinematic viscosity at 100°C is preferably 3,900 $mm^2/s$ or lower, more preferably 3,800 $mm^2/s$ or lower. If the kinematic viscosity is higher than 4,010 $mm^2/s$, sealing performance may be deteriorated.

The kinematic viscosity at 40°C of the liquid polymer A such as liquid polybutene is preferably 20,000 $mm^2/s$ or higher, more preferably 23,000 $mm^2/s$ or higher. If the kinematic viscosity is lower than 20,000 $mm^2/s$, the sealant may be soft and its flowing may occur. The kinematic viscosity at 40°C is preferably 30,000 $mm^2/s$ or lower, more preferably 28,000 $mm^2/s$ or lower. If the kinematic viscosity is higher than 30,000 $mm^2/s$, the sealant may have too high a viscosity and deteriorated sealing performance.

The kinematic viscosity at 40°C of the liquid polymer B such as liquid polybutene is preferably 120,000 $mm^2/s$ or higher, more preferably 150,000 $mm^2/s$ or higher. If the kinematic viscosity is lower than 120,000 $mm^2/s$, the sealant may have too low a viscosity and readily flow during service of the tire, resulting in deterioration in sealing performance and uniformity. The kinematic viscosity at 40°C is preferably 200,000 $mm^2/s$ or lower, more preferably 170,000 $mm^2/s$ or lower. If the kinematic viscosity is higher than 200,000 $mm^2/s$, the sealant may have too high a viscosity and deteriorated sealing performance.

Only one kind of liquid polymer may be used. In this case, the kinematic viscosity at 100°C of the liquid polymer is preferably 550 $mm^2/s$ or higher, more preferably 560 $mm^2/s$ or higher, still more preferably 570 $mm^2/s$ or higher,

particularly preferably 580 $mm^2/s$ or higher, while it is preferably 3,900 $mm^2/s$ or lower, more preferably 3,000 $mm^2/s$ or lower, still more preferably 1,500 $mm^2/s$ or lower, further preferably 1,000 $mm^2/s$ or lower, particularly preferably 750 $mm^2/s$ or lower, most preferably 650 $mm^2/s$ or lower.

Moreover, the kinematic viscosity at 40°C of the liquid polymer is preferably 20,000 $mm^2/s$ or higher, more preferably 21,000 $mm^2/s$ or higher, still more preferably 22,500 $mm^2/s$ or higher, particularly preferably 25,000 $mm^2/s$ or higher, while it is preferably 200,000 $mm^2/s$ or lower, more preferably 100,000 $mm^2/s$ or lower, still more preferably 50,000 $mm^2/s$ or lower, particularly preferably 30,000 $mm^2/s$ or lower.

The kinematic viscosity is determined in conformity with JIS K 2283-2000 at 100°C or 40°C.

The amount of the liquid polymer (the combined amount of liquid polymers A and B and the like) relative to 100 parts by mass of the rubber component is preferably 50 parts by mass or more, more preferably 100 parts by mass or more, still more preferably 150 parts by mass or more. If the amount is less than 50 parts by mass, adhesion may be reduced. The amount of the liquid polymer is preferably 400 parts by mass or less, more preferably 300 parts by mass or less, still more preferably 250 parts by mass or less. If the amount is more than 400 parts by mass, flowing of the sealant may occur.

In the case where the liquid polymers A and B are used in combination, the blending ratio of these polymers [(amount of liquid polymer A) / (amount of liquid polymer B)] is preferably 10/90 to 90/10, more preferably 30/70 to 70/30, still more preferably 40/60 to 60/40. When the blending ratio is within the range described above, the sealant is provided with good adhesion.

Among the liquid polymers, preferably only one kind of liquid polymer having a kinematic viscosity at 100°C of 550 to 3,900 $mm^2/s$ and a kinematic viscosity at 40°C of 20,000 to 200,000 $mm^2/s$ is used in the amount described above. When the above type and amount of liquid polymer is used, the sealant can be adjusted to have viscosities at 0°C and 95°C within the respective predetermined ranges and the effects of the present invention can be more suitably achieved.

The organic peroxide (crosslinking agent) is not particularly limited, and may be any conventionally known compound. Use of a butyl-based rubber or a liquid polymer in an organic peroxide crosslinking system improves adhesion, sealing performance, fluidity, and processability.

Examples of the organic peroxide include acyl peroxides such as benzoyl peroxide, dibenzoyl peroxide, or p-chlorobenzoyl peroxide; peroxyesters such as 1-butyl peroxyacetate, t-butyl peroxybenzoate, or t-butyl peroxyphthalate; ketone peroxides such as methyl ethyl ketone peroxide; alkyl peroxides such as di-t-butyl peroxybenzoate or 1,3-bis(1-butylperoxyisopropyl)benzene; hydroperoxides such as t-butyl hydroperoxide; and dicumyl peroxide and t-butylcumyl peroxide. In particular, in view of adhesion and fluidity, acyl peroxides are preferred, and dibenzoyl peroxide is particularly preferred. Moreover, the organic peroxide (crosslinking agent) to be used is preferably in the form of powder. Such a powdered organic peroxide (crosslinking agent) can be precisely and suitably supplied to a continuous kneader so that the sealant can be produced with high productivity.

As the amount of the organic peroxide (crosslinking agent) is increased, the rubber crosslinking reaction tends to more proceed to increase the crosslink density and thus the viscosity at 95°C tends to increase. The amount of the organic peroxide relative to 100 parts by mass of the rubber component is preferably 0.5 parts by mass or more, more preferably 1 part by mass or more, still more preferably 5 parts by mass or more, particularly preferably 6 parts by mass or more. If the amount is less than 0.5 parts by mass, crosslink density decreases so that flowing of the sealant may occur. The amount is preferably 40 parts by mass or less, more preferably 20 parts by mass or less, still more preferably 15 parts by mass or less, particularly preferably 12 parts by mass or less. If the amount is more than 40 parts by mass, crosslink density can excessively increase so that the sealant may be excessively hardened and have reduced sealing performance.

The crosslinking activator (vulcanization accelerator) to be used may be at least one selected from the group consisting of sulfenamide crosslinking activators, thiazole crosslinking activators, thiuram crosslinking activators, thiourea crosslinking activators, guanidine crosslinking activators, dithiocarbamate crosslinking activators, aldehyde-amine crosslinking activators, aldehyde-ammonia crosslinking activators, imidazoline crosslinking activators, xanthate crosslinking activators, and quinone dioxime compounds (quinoid compounds). For example, quinone dioxime compounds (quinoid compounds) can be suitably used. Use of a butyl-based rubber or a liquid polymer in a crosslinking system including such a crosslinking activator added to an organic peroxide improves adhesion, sealing performance, fluidity, and processability.

Examples of the quinone dioxime compound include p-benzoquinone dioxime, p-quinone dioxime, p-quinone dioxime diacetate, p-quinone dioxime dicaproate, p-quinone dioxime dilaurate, p-quinone dioxime distearate, p-quinone dioxime dicrotonate, p-quinone dioxime dinaphthenate, p-quinone dioxime succinate, p-quinone dioxime adipate, p-quinone dioxime difuroate, p-quinone dioxime dibenzoate, p-quinone dioxime di(o-chlorobenzoate), p-quinone dioxime di(p-chlorobenzoate), p-quinone dioxime di(p-nitrobenzoate), p-quinone dioxime di(m-nitrobenzoate), p-quinone dioxime di(3,5-dinitrobenzoate), p-quinone dioxime di(p-methoxybenzoate), p-quinone dioxime di(n-amyloxybenzoate), and p-quinone dioxime di(m-bromobenzoate). In view of adhesion, sealing performance, and fluidity, p-benzoquinone dioxime is preferred among these. Moreover, the crosslinking activator (vulcanization accelerator) to be used is preferably in the form of powder. Such a powdered crosslinking activator (vulcanization accelerator) can be precisely and suitably supplied to a continuous kneader so that the sealant can be produced with high productivity.

As the amount of the crosslinking activator such as quinone dioxime compound is increased, the rubber crosslinking reaction tends to more proceed to increase the crosslink density and thus the viscosity at 95°C tends to increase. The amount of the crosslinking activator relative to 100 parts by mass of the rubber component is preferably 0.5 parts by mass or more, more preferably 1 part by mass or more, still more preferably 3 parts by mass or more, particularly preferably 5 parts by mass or more, most preferably 6 parts by mass or more. If the amount is less than 0.5 parts by mass, flowing of the sealant may occur. The amount of the crosslinking activator is preferably 40 parts by mass or less, more preferably 20 parts by mass or less, still more preferably 15 parts by mass or less, particularly preferably 12 parts by mass or less. If the amount is more than 40 parts by mass, sealing performance may be reduced.

The sealant may contain an inorganic filler such as carbon black, silica, calcium carbonate, calcium silicate, magnesium oxide, aluminum oxide, barium sulfate, talc, or mica; or a plasticizer such as aromatic process oil, naphthenic process oil, or paraffinic process oil.

To prevent degradation by ultraviolet rays, the inorganic filler is preferably carbon black. In this case, the amount of the carbon black relative to 100 parts by mass of the rubber component is preferably 1 part by mass or more, more preferably 10 parts by mass or more. If the amount is less than 1 part by mass, sealing performance may be reduced due to degradation by ultraviolet rays. The amount of the carbon black is preferably 50 parts by mass or less, more preferably 40 parts by mass or less, still more preferably 25 parts by mass or less. If the amount is more than 50 parts by mass, the sealant may have too high a viscosity and deteriorated sealing performance.

The amount of the plasticizer relative to 100 parts by mass of the rubber component is preferably 1 part by mass or more, more preferably 5 parts by mass or more. If the amount is less than 1 part by mass, the sealant may exhibit lower adhesion to tires and may not have sufficient sealing performance. The amount of the plasticizer is preferably 40 parts by mass or less, more preferably 20 parts by mass or less. If the amount is more than 40 parts by mass, the sealant may slide in a kneader so that it may not be readily kneaded.

The sealant is preferably prepared by mixing a pelletized butyl-based rubber, a powdered crosslinking agent, and a powdered crosslinking activator, more preferably by mixing a pelletized butyl-based rubber, a liquid polybutene, a plasticizer, carbon black powder, a powdered crosslinking agent, and a powdered crosslinking activator. Such raw materials can be suitably supplied to a continuous kneader so that the sealant can be produced with high productivity.

The sealant is preferably obtained by combining a rubber component including a butyl-based rubber with predetermined amounts of a liquid polymer, an organic peroxide, and a crosslinking activator.

The sealant can achieve a balanced improvement in adhesion, sealing performance, fluidity, and processability when it contains a mixture of butyl rubber and a liquid polymer such as liquid polybutene, and especially a combination of butyl rubber and a liquid polymer including two or more materials having different viscosities from one another. This is because the introduction of a liquid polymer component to an organic peroxide crosslinking system including butyl rubber as the rubber component provides the sealant with adhesion and the use of in particular liquid polymers having different viscosities and solid butyl rubber suppresses flowing of the sealant during high-speed driving, as a result of which a balanced improvement in adhesion, sealing performance, fluidity, and processability can be achieved.

Moreover, it is preferred that the sealant contain a butyl-based rubber and an organic peroxide, and particularly that the sealant contain a butyl-based rubber and specific amounts of an organic peroxide and a crosslinking activator, because such a sealant has a good balance of excellent sealing performance and excellent fluidity.

The viscosity at 40°C of the sealant is not particularly limited. In view of adhesion and fluidity and to allow the sealant to suitably maintain a generally string shape when it is applied to the inner periphery of the tire, for example, the viscosity at 40°C is preferably 3,000 Pa·s or higher, more preferably 5,000 Pa·s or higher, while it is preferably 70,000 Pa·s or lower, more preferably 50,000 Pa·s or lower. If the viscosity is lower than 3,000 Pa·s, the applied sealant may flow when the tire stops rotating, so that the sealant may not maintain the film thickness. Also, if the viscosity is higher than 70,000 Pa·s, the sealant cannot be readily discharged from the nozzle.

The viscosity of the sealant is determined at 40°C in conformity with JIS K 6833 using a rotational viscometer.

A self-sealing tire including a sealant layer located radially inside an innerliner can be produced by preparing a sealant by mixing the aforementioned materials, and applying the sealant to the inner periphery of a tire, and preferably to a radially inner face of an innerliner. The materials of the sealant can be mixed using known continuous kneaders, for example. In particular, they are preferably mixed using a co-rotating or counter-rotating multi-screw kneading extruder, and especially a twin screw kneading extruder.

The continuous kneader (especially twin screw kneading extruder) preferably has a plurality of supply ports for supplying raw materials, more preferably at least three supply ports, still more preferably at least three supply ports including upstream, midstream, and downstream supply ports. By sequentially supplying the raw materials to the continuous kneader (especially twin screw kneading extruder), the raw materials are mixed and continuously prepared into a sealant.

Preferably, the raw materials are sequentially supplied to the continuous kneader (especially twin screw kneading extruder), starting from the raw material having a higher viscosity. In this case, the materials can be sufficiently mixed and prepared into a sealant of a consistent quality. Moreover, powder materials, which improve kneadability, are desirably introduced at a position as upstream as possible.

The organic peroxide is preferably supplied from a downstream supply port of the continuous kneader (especially twin screw kneading extruder). In this case, the time period from supplying the organic peroxide to applying the sealant to a tire can be shortened, and thus the sealant can be applied to a tire before curing, resulting in more stable production of self-sealing tires.

Since kneading is unsuccessfully accomplished when a large amount of liquid polymer is introduced at once into the continuous kneader (especially twin screw kneading extruder), the liquid polymer is preferably supplied to the continuous kneader (especially twin screw kneading extruder) from a plurality of supply ports. In this case, the sealant can be more suitably kneaded.

When the continuous kneader (especially twin screw kneading extruder) is used, the sealant is preferably prepared using the continuous kneader (especially twin screw kneading extruder) having at least three supply ports by supplying a rubber component such as a butyl-based rubber, an inorganic filler, and a crosslinking activator each from an upstream supply port, a liquid polymer B from a midstream supply port, and a liquid polymer A, an organic peroxide, and a plasticizer each from a downstream supply port of the continuous kneader (especially twin screw kneading extruder), followed by kneading and extrusion. The materials such as a liquid polymer may be entirely or partly supplied from the respective supply ports. Preferably, 95% by mass or more of the entire amount of each material is supplied from the supply port.

Preferably, all the raw materials to be supplied to the continuous kneader are introduced into the continuous kneader under the control of a quantitative feeder. This allows for continuous and automated preparation of the sealant.

Any feeder that can provide quantitative feeding may be used, including known feeders such as screw feeders, plunger pumps, gear pumps, and mohno pumps.

Preferably, solid raw materials (especially pellets or powder) such as a pelletized butyl-based rubber, carbon black powder, a powdered crosslinking agent, or a powdered crosslinking activator are quantitatively supplied using a screw feeder. This allows the solid raw materials to be supplied precisely in fixed amounts, thereby enabling the production of a higher quality sealant and therefore a higher quality self-sealing tire.

Moreover, the solid raw materials are preferably individually supplied through separate feeders. In this case, the raw materials need not to be blended beforehand, which facilitates supply of the materials in the mass production.

The plasticizer is preferably quantitatively supplied using a plunger pump. This allows the plasticizer to be supplied precisely in a fixed amount, thereby enabling the production of a higher quality sealant and therefore a higher quality self-sealing tire.

The liquid polymer is preferably quantitatively supplied using a gear pump. This allows the liquid polymer to be supplied precisely in a fixed amount, thereby enabling the production of a higher quality sealant and therefore a higher quality self-sealing tire.

The liquid polymer to be supplied is preferably kept under constant temperature control. The constant temperature control allows the liquid polymer to be supplied more precisely in a fixed amount. The liquid polymer to be supplied preferably has a temperature of 20°C to 90°C, more preferably 40°C to 70°C.

In view of easy mixing, extrudability, and control of the rate of curing acceleration, the mixing in the continuous kneader (especially twin screw kneading extruder) is preferably carried out at a barrel temperature of 30°C (preferably 50°C) to 150°C.

In view of sufficient mixing, preferably the materials supplied upstream are mixed for 1 to 3 minutes and the materials supplied midstream are mixed for 1 to 3 minutes. In view of avoiding (controlling) crosslinking, the materials supplied downstream are preferably mixed for 0.5 to 2 minutes. The times for mixing each refer to the residence time in the continuous kneader (especially twin screw kneading extruder) from supply to discharge. For example, the time for mixing the materials supplied downstream means the residence time from when they are supplied through a downstream supply port until they are discharged.

By adjusting the screw rotational speed of the continuous kneader (especially twin screw kneading extruder) or the setting of a temperature controller, the temperature of the sealant discharged from the outlet can be controlled and therefore the rate of curing acceleration of the sealant can be controlled so that the sealant can be provided with good fluidity. As the screw rotational speed of the continuous kneader (especially twin screw kneading extruder) is increased, kneadability and material temperature increase. The screw rotational speed does not affect the discharge amount. In view of sufficient mixing and control of the rate of curing acceleration, the screw rotational speed is preferably 50 to 700 (preferably 550) rpm. In view of sufficient mixing, plasticity, and control of the rate of curing acceleration, the pressure inside the continuous kneader (especially twin screw kneading extruder) is preferably 1.0 to 10.0 MPa.

In view of sufficient mixing and control of the rate of curing acceleration, the temperature of the sealant discharged from the outlet of the continuous kneader (especially twin screw kneading extruder) is preferably 70°C to 150°C, more preferably 90°C to 130°C. When the temperature of the sealant is within the range described above, the crosslinking reaction begins upon the application of the sealant and the sealant adheres well to the inner periphery of a tire and, at the same time, the crosslinking reaction more suitably proceeds, whereby a self-sealing tire having high sealing performance can be produced. Moreover, a crosslinking step described later is not required in this case.

The amount of the sealant discharged from the outlet of the continuous kneader (especially twin screw kneading extruder) is determined according to the amounts of the raw materials supplied to the supply ports. The amounts of the raw materials supplied to the supply ports are not particularly limited, and a person skilled in the art can appropriately select the amounts. To suitably produce a self-sealing tire more excellent in uniformity and sealing performance, preferably a substantially constant amount (discharge amount) of the sealant is discharged from the outlet.

Herein, the substantially constant discharge amount means that the discharge amount varies within a range of 93 to 107%, preferably 97 to 103%, more preferably 98 to 102%, still more preferably 99 to 101%.

The outlet of the continuous kneader (especially twin screw kneading extruder) is preferably connected to a nozzle. Since the continuous kneader (especially twin screw kneading extruder) can discharge the materials at a high pressure, the sealant prepared through a nozzle (preferably a small diameter nozzle creating high fluid resistance) mounted on the outlet can be attached to a tire in the form of a thin, generally string (bead) . Specifically, by discharging the sealant from a nozzle connected to the outlet of the continuous kneader (especially twin screw kneading extruder) and sequentially applying it to the inner periphery of a tire, the applied sealant has a substantially constant thickness, thereby preventing deterioration of tire uniformity. Thus, a self-sealing tire excellent in weight balance can be produced.

Next, for example, the mixed sealant is discharged from the nozzle connected to the outlet of the continuous kneader (especially twin screw kneading extruder) or other extruders to feed and apply the sealant directly to the inner periphery of a vulcanized tire, whereby a self-sealing tire can be produced. In this case, since the sealant which has been mixed in a twin screw kneading extruder or the like and, further, in which the crosslinking reaction in the extruder is suppressed is directly applied to the tire inner periphery, the crosslinking reaction of the sealant begins upon the application and the sealant adheres well to the tire inner periphery and, at the same time, the crosslinking reaction suitably proceeds. For this reason, the sealant applied to the tire inner periphery suitably forms a sealant layer while maintaining a generally string shape. Accordingly, the sealant can be applied and processed in a series of steps so that productivity is further enhanced. Moreover, the application of the sealant to the inner periphery of a vulcanized tire further enhances the productivity of self-sealing tires. Furthermore, the sealant discharged from the nozzle connected to the outlet of the continuous kneader (especially twin screw kneading extruder) is preferably sequentially applied directly to the inner periphery of the tire. In this case, since the sealant in which the crosslinking reaction in the continuous kneader (especially twin screw kneading extruder) is suppressed is directly and continuously applied to the tire inner periphery, the crosslinking reaction of the sealant begins upon the application and the sealant adheres well to the tire inner periphery and, at the same time, the crosslinking reaction suitably proceeds, whereby a self-sealing tire excellent in weight balance can be produced with higher productivity.

With regard to the application of the sealant to the inner periphery of a tire, the sealant may be applied to at least an inner periphery of a tire corresponding to a tread portion, more preferably at least an inner periphery of a tire corresponding to a breaker. Omitting the application of the sealant to areas where the sealant is unnecessary further enhances the productivity of self-sealing tires.

The inner periphery of a tire corresponding to a tread portion refers to an inner periphery of a tire located radially inside a tread portion which contacts the road surface. The inner periphery of a tire corresponding to a breaker refers to an inner periphery of a tire located radially inside a breaker. The breaker refers to a component placed inside a tread and radially outside a carcass. Specifically, it is a component shown as the breaker 16 in Fig. 9, for example.

Unvulcanized tires are usually vulcanized using bladders. During the vulcanization, such a bladder inflates and closely attaches to the inner periphery (innerliner) of the tire. Hence, a mold release agent is usually applied to the inner periphery (innerliner) of the tire to avoid adhesion between the bladder and the inner periphery (innerliner) of the tire after completion of the vulcanization.

The mold release agent is usually a water-soluble paint or a mold-releasing rubber. However, the presence of the mold release agent on the inner periphery of a tire may impair the adhesion between the sealant and the inner periphery of the tire. For this reason, the mold release agent is preferably preliminarily removed from the inner periphery of a tire. In particular, the mold release agent is more preferably preliminarily removed at least from a region of the tire inner periphery in which application of the sealant begins. Still more preferably, the mold release agent is preliminary removed from the entire region of the tire inner periphery where the sealant is to be applied. In this case, the sealant adheres better to the tire inner periphery and therefore a self-sealing tire having higher sealing performance can be produced.

The mold release agent may be removed from the tire inner periphery by any method, including known methods such as buffing treatment, laser treatment, high pressure water washing, or removal with a detergent (preferably a neutral detergent).

An example of a production facility used in a method for producing the self-sealing tire will be briefly described referring to Fig. 7.

The production facility includes a twin screw kneading extruder 60, a material feeder 62 for supplying raw materials to the twin screw kneading extruder 60, and a rotary drive device 50 which fixes and rotates a tire 10 while moving the tire in the width and radial directions of the tire. The twin screw kneading extruder 60 has five supply ports 61, specifically, including three upstream supply ports 61a, one midstream supply port 61b, and one downstream supply port 61c. Further, the outlet of the twin screw kneading extruder 60 is connected to a nozzle 30.

The raw materials are sequentially supplied from the material feeder 62 to the twin screw kneading extruder 60 through the supply ports 61 of the twin screw kneading extruder 60 and then kneaded in the twin screw kneading extruder 60, whereby they are sequentially prepared into a sealant. The prepared sealant is continuously discharged from the nozzle 30 connected to the outlet of the twin screw kneading extruder 60. The tire is traversed and/or moved up and down (moved in the width direction and/or the radial direction of the tire) while being rotated by the tire drive device, and the sealant discharged from the nozzle 30 is sequentially applied directly to the inner periphery of the tire, whereby the sealant can be continuously and spirally attached to the tire inner periphery. In other words, the sealant can be continuously and spirally attached to the inner periphery of a tire by sequentially applying the sealant continuously discharged from a continuous kneader (especially twin screw kneading extruder) directly to the inner periphery of the tire while rotating and simultaneously moving the tire in the width direction and/or the radial direction of the tire.

Such a continuous and spiral attachment of the sealant to the tire inner periphery can prevent deterioration of tire uniformity, thereby enabling the production of a self-sealing tire excellent in weight balance. Moreover, the continuous and spiral attachment of the sealant to the tire inner periphery allows for the formation of a sealant layer in which the sealant is uniformly provided in the circumferential and width directions of the tire, and especially in the circumferential direction of the tire. Thus, a self-sealing tire excellent in sealing performance can be stably produced with high productivity. The sealant is preferably attached without overlapping in the width direction, more preferably without gaps. In this case, deterioration of tire uniformity can be more prevented and a more uniform sealant layer can be formed.

The raw materials are sequentially supplied to a continuous kneader (especially twin screw kneading extruder) which sequentially prepares a sealant. The prepared sealant is continuously discharged from a nozzle connected to the outlet of the continuous kneader (especially twin screw kneading extruder) and the discharged sealant is sequentially applied directly to the inner periphery of a tire. In this manner, a self-sealing tire can be produced with high productivity.

The sealant layer is preferably formed by continuously and spirally applying a generally string-shaped sealant to the inner periphery of a tire. In this case, a sealant layer formed of a generally string-shaped sealant provided continuously and spirally around the inner periphery of a tire can be formed on the inner periphery of the tire. The sealant layer may be formed of a laminate of the sealant, but preferably consists of one layer of the sealant.

In the case of a generally string-shaped sealant, a sealant layer consisting of one layer of the sealant can be formed by continuously and spirally applying the sealant to the inner periphery of a tire. In the case of a generally string-shaped sealant, since the applied sealant has a certain thickness, even a sealant layer consisting of one layer of the sealant allows for prevention of deterioration of tire uniformity and therefore a self-sealing tire having an excellent weight balance and good sealing performance can be produced. Moreover, since it is sufficient to only apply one layer of the sealant without laminating layers of the sealant, a self-sealing tire can be produced with higher productivity.

As described above, a pneumatic tire (self-sealing tire) including a sealant layer having a good balance of excellent sealing performance and excellent fluidity can be stably produced with high productivity when the sealant layer is formed by continuously and spirally applying to the inner periphery of a tire a generally string-shaped sealant prepared from the rubber composition for pneumatic tires (rubber composition for self-sealing tires, sealant) of the present invention having the above-described specific viscosity characteristics.

The number of turns of the sealant around the inner periphery of the tire is preferably 20 to 70, more preferably 20 to 60, still more preferably 35 to 50, because then deterioration of tire uniformity can be prevented and a self-sealing tire having an excellent weight balance and good sealing performance can be produced with higher productivity. Here, two turns means that the sealant is applied such that it makes two laps around the inner periphery of the tire. In Fig. 4, the number of turns of the sealant is six.

Use of a continuous kneader (especially twin screw kneading extruder) enables preparation (kneading) of a sealant and discharge (application) of the sealant simultaneously and continuously, and thus a sealant that is highly viscous and highly adhesive and difficult to handle can be directly applied to the tire inner periphery without handling it and a self-sealing tire can be produced with high productivity. If a sealant is prepared by kneading a mixture with a curing agent in a batch kneader, the time period from preparing a sealant to applying the sealant to a tire is not constant. In contrast, if a sealant is sequentially prepared by mixing raw materials including an organic peroxide using a continuous kneader (especially twin screw kneading extruder), and the sealant is sequentially applied to the inner periphery of a tire, the time period from preparing a sealant to applying the sealant to a tire is constant. Therefore, when the sealant is applied through a nozzle, a stable amount of the sealant is discharged from the nozzle and, further, deterioration of the adhesion of the sealant to the tire is suppressed and a constant adhesion is obtained. For this reason, even a sealant that is highly viscous and highly adhesive and difficult to handle can be precisely applied to the tire inner periphery and a self-sealing tire of a consistent quality can be stably produced.

The following describes methods for applying the sealant to the inner periphery of a tire.

<First embodiment>

According to a first embodiment, a self-sealing tire can be produced, for example, by performing the Step (1), Step (2), and Step (3) below in the process of applying an adhesive sealant through a nozzle to the inner periphery of a tire while rotating the tire and moving at least one of the tire and the nozzle in the width direction of the tire: Step (1) of measuring the distance between the inner peripheral surface of the tire and the tip of the nozzle using a non-contact displacement sensor; Step (2) of moving at least one of the tire and the nozzle in the radial direction of the tire according to the measurement to adjust the gap between the inner peripheral surface of the tire and the tip of the nozzle to a predetermined distance; and Step (3) of applying the sealant to the inner periphery of the tire after the gap is adjusted.

The gap between the inner peripheral surface of the tire and the tip of the nozzle can be maintained at a constant distance by measuring the distance between the inner peripheral surface of the tire and the tip of the nozzle using a non-contact displacement sensor and feeding back the measurement. Moreover, since the sealant is applied to the tire inner periphery while maintaining the gap at a constant distance, the sealant can have a uniform thickness without being affected by variations in tire shape and irregularities at joint portions or the like. Furthermore, since it is not necessary to enter the coordinate data of each tire having a different size as in the conventional art, the sealant can be efficiently applied.

Fig. 1 is an explanatory view schematically showing an example of an applicator used in a method for producing a self-sealing tire of the present invention. Moreover, Fig. 2 is an enlarged view showing the vicinity of the tip of a nozzle provided with the applicator shown in Fig. 1.

Fig. 1 shows a cross section of a part of a tire 10 in the meridional direction (a cross section taken along a plane including the width and radial directions of the tire). Fig. 2 shows a cross section of a part of the tire 10 taken along a plane including the circumferential and radial directions of the tire. In Fig. 1 and Fig. 2, the width direction (axis direction) of the tire is indicated by an arrow X, the circumferential direction of the tire is indicated by an arrow Y, and the radial direction of the tire is indicated by an arrow Z.

The tire 10 is mounted on a rotary drive device (not shown) which fixes and rotates a tire while moving the tire in the width and radial directions of the tire. The rotary drive device allows for the following independent operations: rotation around the axis of the tire, movement in the width direction of the tire, and movement in the radial direction of the tire.

The rotary drive device includes a controller (not shown) capable of controlling the amount of movement in the radial direction of the tire. The controller may be capable of controlling the amount of movement in the width direction of the tire and/or the rotational speed of the tire.

A nozzle 30 is mounted on the tip of an extruder (not shown) and can be inserted into the inside of the tire 10. Then an adhesive sealant 20 extruded from the extruder is discharged from the tip 31 of the nozzle 30.

A non-contact displacement sensor 40 is mounted on the nozzle 30 to measure a distance d between the inner peripheral surface 11 of the tire 10 and the tip 31 of the nozzle 30.

Thus, the distance d to be measured by the non-contact displacement sensor is the distance in the radial direction of the tire between the inner peripheral surface of the tire and the tip of the nozzle.

According to the method for producing the self-sealing tire of the present invention, the tire 10 formed through a vulcanization step is first mounted on the rotary drive device, and the nozzle 30 is inserted into the inside of the tire 10. Then, as shown in Fig. 1 and Fig. 2, the tire 10 is rotated and simultaneously moved in the width direction while the sealant 20 is discharged from the nozzle 30, thereby continuously applying the sealant to the inner periphery 11 of the tire 10. The tire 10 is moved in the width direction according to the pre-entered profile of the inner periphery 11 of the tire 10.

The sealant 20 preferably has a generally string shape as described later. More specifically, the sealant preferably maintains a generally string shape when the sealant is applied to the inner periphery of the tire. In this case, the generally string-shaped sealant 20 is continuously and spirally attached to the inner periphery 11 of the tire 10.

The generally string shape as used herein refers to a shape having a certain width and a certain thickness and having a length longer than the width. Fig. 4 schematically shows an example of a generally string-shaped sealant continuously and spirally attached to the inner periphery of the tire. Moreover, Fig. 8 schematically shows an example of a cross section of the sealant shown in Fig. 4 when the sealant is cut along the A-A straight line orthogonal to the direction along which the sealant is applied (the longitudinal direction). Thus, the generally string-shaped sealant has a certain width (length indicated by W in Fig. 8) and a certain thickness (length indicated by D in Fig. 8). The width of the sealant means the width of the applied sealant. The thickness of the sealant means the thickness of the applied sealant, more specifically the thickness of the sealant layer.

Specifically, the generally string-shaped sealant is a sealant having a thickness (thickness of the applied sealant, thickness of the sealant layer, length indicated by D in Fig. 8) satisfying a preferable numerical range and a width (width of the applied sealant, length indicated by W in Fig. 4, length indicated by $W_0$ in Fig. 6) satisfying a preferable numerical range as described later, more preferably a sealant having a ratio of the thickness to the width of the sealant [(thickness of sealant)/(width of sealant)] satisfying a preferable numerical range as described later. The generally string-shaped sealant is also a sealant having a cross-sectional area satisfying a preferable numerical range as described later.

According to the method for producing the self-sealing tire of the present invention, the sealant is applied to the inner periphery of the tire by the following Steps (1) to (3) .

<Step (1)>

As shown in Fig. 2, the distance d between the inner peripheral surface 11 of the tire 10 and the tip 31 of the nozzle 30 is measured with the non-contact displacement sensor 40 before the application of the sealant 20. The distance d is measured every time the sealant 20 is applied to the inner periphery 11 of the tire 10 from the beginning to the ending of the application of the sealant 20.

<Step (2)>

The distance d data is transmitted to the controller of the rotary drive device. According to the data, the controller controls the amount of movement in the radial direction of the tire so that the gap between the inner peripheral surface 11 of the tire 10 and the tip 31 of the nozzle 30 is adjusted to a predetermined distance.

<Step (3)>

The sealant 20 is continuously discharged from the tip 31 of the nozzle 30 and therefore is applied to the inner periphery 11 of the tire 10 under conditions where the above gap is controlled. Through the above Steps (1) to (3), the sealant 20 having a uniform thickness can be applied to the inner periphery 11 of the tire 10.

Fig. 3 is an explanatory view schematically showing the positional relationship of the nozzle to the tire.

According to the present invention, as shown in Fig. 3, the sealant can be applied while maintaining the gap between the inner peripheral surface 11 of the tire 10 and the tip 31 of the nozzle 30 at a predetermined distance $d_0$ during the movement of the nozzle 30 to positions (a) to (d) relative to the tire 10.

To more suitably achieve the effects of the present invention, the controlled distance $d_0$ is preferably 0.3 mm or more, more preferably 1.0 mm or more. If the distance is less than 0.3 mm, the tip of the nozzle is too close to the inner peripheral surface of the tire, which makes it difficult to allow the sealant having a predetermined thickness to be applied. The controlled distance $d_0$ is also preferably 3.0 mm or less, more preferably 2.0 mm or less. If the distance is more than 3.0 mm, the sealant cannot be attached well to the tire, which may result in reduced production efficiency. The controlled distance $d_0$ refers to the distance in the radial direction of the tire between the inner peripheral surface of the tire and the tip of the nozzle after the distance is controlled in Step (2).

To more suitably achieve the effects of the present invention, the controlled distance $d_0$ is preferably 30% or less, more preferably 20% or less of the thickness of the applied sealant. The controlled distance $d_0$ is also preferably 5% or more, more preferably 10% or more of the thickness of the applied sealant.

The thickness of the sealant (the thickness of the applied sealant, the thickness of the sealant layer, the length indicated by D in Fig. 8) is not particularly limited. To more suitably achieve the effects of the present invention, the thickness of the sealant is preferably 1.0 mm or more, more preferably 1.5 mm or more, still more preferably 2.0 mm or more, particularly preferably 2.5 mm or more. Also, the thickness of the sealant is preferably 10 mm or less, more preferably 8.0 mm or less, still more preferably 5.0 mm or less. If the thickness is less than 1.0 mm, a puncture hole formed in the tire is difficult to reliably seal. Also, a thickness of more than 10 mm is not preferred because tire weight increases though little difference is made in the effect of sealing puncture holes. The thickness of the sealant can be controlled by adjusting the rotational speed of the tire, the rate of movement in the width direction of the tire, the distance between the tip of the nozzle and the inner peripheral surface of the tire, or the like.

The sealant preferably has a substantially constant thickness (thickness of the applied sealant, thickness of the sealant layer) . In this case, deterioration of tire uniformity can be prevented and a self-sealing tire more excellent in weight balance can be produced.

The substantially constant thickness as used herein means that the thickness varies within a range of 90 to 110%, preferably 95 to 105%, more preferably 98 to 102%, still more preferably 99 to 101%.

According to the present invention, to reduce clogging of the nozzle so that excellent operational stability can be obtained and to more suitably achieve the effects of the present invention, a generally string-shaped sealant is preferably used and more preferably spirally attached to the inner periphery of a tire. However, a sealant not having a generally string shape may also be used and applied by spraying onto the tire inner periphery.

In the case of a generally string-shaped sealant, the width of the sealant (the width of the applied sealant, the length indicated by W in Fig. 4) is not particularly limited. To more suitably achieve the effects of the present invention, the width of the sealant is preferably 0.8 mm or more, more preferably 1.3 mm or more, still more preferably 1.5 mm or more. If the width is less than 0.8 mm, the number of turns of the sealant around the tire inner periphery increases, which may result in reduced production efficiency. The width of the sealant is also preferably 18 mm or less, more preferably 13 mm or less, still more preferably 9.0 mm or less, particularly preferably 7.0 mm or less, most preferably 6.0 mm or less, still most preferably 5.0 mm or less. If the width is more than 18 mm, a weight imbalance may be more likely to occur.

The ratio of the thickness of the sealant (the thickness of the applied sealant, the thickness of the sealant layer, the length indicated by D in Fig. 8) to the width of the sealant (the width of the applied sealant, the length indicated by W in Fig. 4) [(thickness of sealant)/(width of sealant)] is preferably 0.6 to 1.4, more preferably 0.7 to 1.3, still more preferably 0.8 to 1.2, particularly preferably 0.9 to 1.1. A ratio closer to 1.0 results in a sealant having an ideal string shape, so that a self-sealing tire having high sealing performance can be produced with higher productivity.

To more suitably achieve the effects of the present invention, the cross-sectional area of the sealant (the cross-sectional area of the applied sealant, the area calculated by $D \times W$ in Fig. 8) is preferably 0.8 $mm^2$ or more, more preferably 1.95 $mm^2$ or more, still more preferably 3.0 $mm^2$ or more, particularly preferably 3.75 $mm^2$ or more, while it is preferably 180 $mm^2$ or less, more preferably 104 $mm^2$ or less, still more preferably 45 $mm^2$ or less, particularly preferably 35 $mm^2$ or less, most preferably 25 $mm^2$ or less.

The width of the region where the sealant is attached (hereinafter also referred to as the width of the attached region or the width of the sealant layer, and corresponding to the length calculated by $6 \times W$ in Fig. 4 or the length calculated by $W_1 + 6 \times W_0$ in Fig. 6) is not particularly limited. To more suitably achieve the effects of the present invention, the width is preferably 80% or more, more preferably 90% or more, still more preferably 100% or more, but preferably 120% or less, more preferably 110% or less, of the tread contact width.

To more suitably achieve the effects of the present invention, the width of the sealant layer is preferably 85 to 115%, more preferably 95 to 105% of the width of the breaker of the tire (the length of the breaker in the width direction of the tire).

Herein, when the tire is provided with a plurality of breakers, the length of the breaker in the width direction of the tire refers to the length of the breaker that is the longest in the width direction of the tire, among the plurality of breakers, in the width direction of the tire.

Herein, the tread contact width is determined as follows: a no-load and normal condition tire mounted to a normal rim and filled with a normal internal pressure is contacted with a plane at a camber angle of 0 degrees while a normal load is applied to the tire, and then the outermost contact position in the tire axis direction is defined as "contact edge Te". The distance in the tire axis direction between the contact edges Te and Te is defined as tread contact width TW. The dimensions and the like of tire components are measures determined under the above normal conditions, unless otherwise stated.

The "normal rim" refers to a rim specified for each tire by various standards in a standard system containing standards according to which tires are provided, and may be "standard rim" in JATMA, "design rim" in TRA, or "measuring rim" in ETRTO. Moreover, the "normal internal pressure" refers to an air pressure specified for each tire by various standards in a standard system containing standards according to which tires are provided, and may be "maximum air pressure" in JATMA, a maximum value shown in Table "TIRE LOAD LIMITS AT VARIOUS COLD INFLATION PRESSURES" in TRA, or "inflation pressure" in ETRTO. In the case of tires for passenger vehicles, the normal internal pressure is 180 kPa.

The "normal load" refers to a load specified for each tire by various standards in a standard system containing standards according to which tires are provided, and may be "maximum load capacity" in JATMA, a maximum value shown in Table "TIRE LOAD LIMITS AT VARIOUS COLD INFLATION PRESSURES" in TRA, or "load capacity" in ETRTO. In the case of tires for passenger vehicles, the normal load is a 88% load specified above.

The rotational speed of the tire during the application of the sealant is not particularly limited. To more suitably achieve the effects of the present invention, the rotational speed is preferably 5 m/min or higher, more preferably 10 m/min or higher, while it is preferably 30 m/min or lower, more preferably 20 m/min or lower. If the rotational speed is lower than 5 m/min or higher than 30 m/min, a sealant having a uniform thickness cannot be readily applied.

In the present invention, the use of a non-contact displacement sensor can reduce the risk of troubles caused by adhesion of the sealant to the sensor. The non-contact displacement sensor used in the present invention is not particularly limited as long as the sensor can measure the distance between the inner peripheral surface of the tire and the tip of the nozzle. Examples include laser sensors, photosensors, and capacitance sensors. These sensors may be used alone or in combinations of two or more. In particular, for measurement of rubber, laser sensors or photosensors are preferred, and laser sensors are more preferred. When a laser sensor is used, the distance between the inner peripheral surface of the tire and the tip of the nozzle can be determined as follows: the inner peripheral surface of the tire is irradiated with a laser; the distance between the inner peripheral surface of the tire and the tip of the laser sensor is determined based on the reflection of the laser; and the distance between the tip of the laser sensor and the tip of the nozzle is subtracted from the determined distance.

The location of the non-contact displacement sensor is not particularly limited as long as the distance between the inner peripheral surface of the tire and the tip of the nozzle before the application of the sealant can be measured. The sensor is preferably mounted on the nozzle, more preferably in a location to which the sealant will not adhere.

The number, size, and the like of the non-contact displacement sensor are also not particularly limited.

Since the non-contact displacement sensor is vulnerable to heat, the sensor is preferably protected with a heat insulator or the like and/or cooled with air or the like to avoid the influence of heat from the hot sealant discharged from the nozzle. This improves the durability of the sensor.

The first embodiment has been described based on an example in which the tire, not the nozzle, is moved in the width and radial directions of the tire. According to the present invention, the nozzle, not the tire, may be moved, or both the tire and the nozzle may be moved.

The rotary drive device preferably includes a means to increase the width of a tire at a bead portion. In the application of the sealant to a tire, increasing the width of the tire at a bead portion allows the sealant to be readily applied to the tire. Particularly when the nozzle is inserted around the inner peripheral surface of the tire mounted on the rotary drive device, the nozzle can be inserted only by parallel movement of the nozzle, which facilitates the control and improves productivity.

Any means that can increase the width of a tire at a bead portion can be used as the means to increase the width of a tire at a bead portion. Examples include a mechanism in which two devices each having a plurality of (preferably two) rolls which have a fixed positional relationship with one another are used and the devices move in the width direction of the tire. The devices may be inserted through both openings of the tire to the inside and allowed to increase the width of the tire at a bead portion.

In the production method, since the sealant which has been mixed in a twin screw kneading extruder or the like and, further, in which the crosslinking reaction is suppressed in the extruder is directly applied to the tire inner periphery, the crosslinking reaction begins upon the application and the sealant adheres well to the tire inner periphery and, at the same time, the crosslinking reaction suitably proceeds, whereby a self-sealing tire having high sealing performance can be produced. Thus, the self-sealing tire with the sealant applied therein does not need further crosslinking, thereby offering good productivity.

In the present invention, the self-sealing tire with the sealant applied therein may be further subjected to a crosslinking step, if necessary.

The self-sealing tire is preferably heated in the crosslinking step. This increases the rate of crosslinking of the sealant and allows the crosslinking reaction to more suitably proceed, thereby enabling the production of a self-sealing tire with higher productivity. The tire can be heated by any method, including known methods, but it may suitably be heated in an oven. The crosslinking step may be carried out, for example, by placing the self-sealing tire in an oven at 70°C to 190°C, preferably 150°C to 190°C, for 2 to 15 minutes.

The tire is preferably rotated in the circumferential direction of the tire during the crosslinking because then flowing of even the just-applied, easily flowing sealant can be prevented and the crosslinking reaction can be accomplished without deterioration of uniformity. The rotational speed is preferably 300 to 1,000 rpm. Specifically, for example, an oven equipped with a rotational mechanism may be used.

Even when the crosslinking step is not additionally performed, the tire is preferably rotated in the circumferential direction of the tire until the crosslinking reaction of the sealant is completed. In this case, flowing of even the just-applied, easily flowing sealant can be prevented and the crosslinking reaction can be accomplished without deterioration of uniformity. The rotational speed is the same as described for the crosslinking step.

In order to increase the rate of crosslinking of the sealant, the tire is preferably preliminarily warmed before the application of the sealant. In this case, a self-sealing tire can be produced with higher productivity. The temperature for pre-heating the tire is preferably 40°C to 100°C, more preferably 50°C to 70°C. When the tire is pre-heated within the temperature range described above, the crosslinking reaction suitably begins upon the application and more suitably proceeds and therefore a self-sealing tire having high sealing performance can be produced. Moreover, when the tire is pre-heated within the temperature range described above, the crosslinking step is not necessary and thus a self-sealing tire can be produced with high productivity.

In general, continuous kneaders (especially twin screw kneading extruders) are continuously operated. In the production of self-sealing tires, however, tires need to be replaced one after another upon completion of the application of the sealant to one tire. Here, in order to produce a higher quality self-sealing tire while suppressing deterioration of productivity, the following method (1) or (2) may be used. The method (1) or (2) may be appropriately selected depending on the situation because these methods have the following disadvantages: a deterioration in quality in the method (1) and an increase in cost in the method (2).

(1) The supply of the sealant to the inner periphery of the tire is controlled by running or stopping the continuous kneader and all the feeders simultaneously.

Specifically, upon completion of the application to one tire, the continuous kneader and all the feeders are simultaneously stopped, the tire is replaced with another tire, preferably within one minute, and the continuous kneader and all the feeders are simultaneously allowed to run to restart the application to the tire. By replacing tires quickly (preferably within one minute), a deterioration in quality can be suppressed.

(2) The supply of the sealant to the inner periphery of the tire is controlled by switching flow channels while allowing the continuous kneader and all the feeders to keep running.

Specifically, the continuous kneader is provided with another flow channel in addition to a nozzle for direct feeding to the tire inner periphery. The prepared sealant may be discharged from the another flow channel after completion of the application to one tire until completion of the replacement of tires. According to this method, since a self-sealing tire can be produced while the continuous kneader and all the feeders are kept running, the produced self-sealing tire can have higher quality.

Non-limiting examples of carcass cords used in the carcass of the self-sealing tire of the present invention include fiber cords and steel cords. Steel cords are preferred among these. In particular, steel cords formed of hard steel wire materials specified in JIS G 3506 are desirable. The use of strong steel cords, instead of commonly used fiber cords, as carcass cords in the self-sealing tire can greatly improve side cut resistance (resistance to cuts formed in the tire side portions due to driving over curbs) and thereby further improve the puncture resistance of the entire tire including the side portions.

The steel cord may have any structure. Examples include steel cords having a $1 \times n$ single strand structure, steel cords having a k + m layer strand structure, steel cords having a $1 \times n$ bundle structure, and steel cords having an $m \times n$ multi-strand structure. The steel cord having a $1 \times n$ single strand structure refers to a single-layered twisted steel cord prepared by intertwining n filaments. The steel cord having a k + m layer strand structure refers to a steel cord having a two-layered structure in which the two layers are different from each other in twist direction and twist pitch, and the inner layer includes k filaments and the outer layer includes m filaments. The steel cord having a $1 \times n$ bundle structure refers to a bundle steel cord prepared by intertwining bundles of n filaments . The steel cord having an $m \times n$ multi-strand structure refers to a multi-strand steel cord prepared by intertwining m strands prepared by first twisting n filaments together. Here, n represents an integer of 1 to 27; k represents an integer of 1 to 10; and m represents an integer of 1 to 3.

The twist pitch of the steel cord is preferably 13 mm or less, more preferably 11 mm or less, while it is preferably 5 mm or more, more preferably 7 mm or more.

The steel cord preferably contains at least one piece of preformed filament formed in the shape of a spiral. Such a preformed filament provides a relatively large gap within the steel cord to enhance rubber permeability and also maintain the elongation under low load, so that molding failure during vulcanization can be prevented.

The surface of the steel cord is preferably plated with brass, Zn, or the like to enhance initial adhesion to the rubber composition.

The steel cord preferably has an elongation of 0.5 to 1.5% under a load of 50 N. If the elongation under a load of 50 N is more than 1.5%, the reinforcing cords may exhibit reduced elongation under high load and thus disturbance absorption may not be maintained. Conversely, if the elongation under a load of 50 N is less than 0.5%, the cords may not exhibit sufficient elongation during vulcanization and thus molding failure may be caused. In view of the above, the elongation under a load of 50 N is more preferably 0.7% or more, but more preferably 1.3% or less.

The endcount of the steel cords is preferably 20 to 50 (ends/5 cm).

<Second embodiment>

The present inventors have found as a result of investigations that the method according to the first embodiment has the following disadvantage: a sealant having a generally string shape is occasionally difficult to attach to the inner periphery of a tire and, in particular, the sealant can be easily separated in the attachment beginning region. A second embodiment is characterized by that in the method for producing the self-sealing tire, the sealant is attached under conditions where the gap between the inner peripheral surface of the tire and the tip of the nozzle is adjusted to a distance $d_1$, and then the sealant is attached under conditions where the gap is adjusted to a distance $d_2$ larger than the distance $d_1$. In this case, the gap between the inner peripheral surface of the tire and the tip of the nozzle is shortened at the beginning of the attachment, so that the width of the sealant corresponding to the attachment beginning region can be increased. As a result, a self-sealing tire can be easily produced in which a generally string-shaped adhesive sealant is continuously and spirally attached to the inner periphery of the tire corresponding to at least a tread portion, and at least one of the longitudinal ends of the sealant forms a wider portion having a larger width than the longitudinally adjoining portion. In this self-sealing tire, the sealant corresponding to the attachment beginning region has a larger width to improve adhesion in the region so that separation of the sealant in the region can be prevented.

The description of the second embodiment basically includes only features different from the first embodiment, and the contents overlapping the description of the first embodiment are omitted.

Figs. 5 are enlarged views showing the vicinity of the tip of a nozzle provided with the applicator shown in Fig. 1. Fig. 5 (a) illustrates a status immediately after the beginning of the sealant attachment and Fig. 5(b) illustrates a status after a lapse of a predetermined time.

Figs. 5 each show a cross section of a part of a tire 10 taken along a plane including the circumferential and radial directions of the tire. In Figs. 5, the width direction (axis direction) of the tire is indicated by an arrow X, the circumferential direction of the tire is indicated by an arrow Y, and the radial direction of the tire is indicated by an arrow Z.

According to the second embodiment, the tire 10 formed through a vulcanization step is first mounted on a rotary drive device, and a nozzle 30 is inserted into the inside of the tire 10. Then, as shown in Fig. 1 and Figs. 5, the tire 10 is rotated and simultaneously moved in the width direction while a sealant 20 is discharged from the nozzle 30, thereby continuously applying the sealant to the inner periphery 11 of the tire 10. The tire 10 is moved in the width direction according to, for example, the pre-entered profile of the inner periphery 11 of the tire 10.

Since the sealant 20 is adhesive and has a generally string shape, the sealant 20 is continuously and spirally attached to an inner periphery 11 of the tire 10 corresponding to a tread portion.

In this process, as shown in Fig. 5(a), the sealant 20 is attached under conditions where the gap between the inner peripheral surface 11 of the tire 10 and the tip 31 of the nozzle 30 is adjusted to a distance $d_1$ for a predetermined time from the beginning of the attachment. Then, after a lapse of the predetermined time, as shown in Fig. 5(b), the tire 10 is moved in the radial direction to change the gap to a distance $d_2$ larger than the distance $d_1$ and the sealant 20 is attached.

The gap may be adjusted from the distance $d_2$ back to the distance $d_1$ before completion of the sealant attachment. In view of production efficiency and tire weight balance, the distance $d_2$ is preferably maintained until the sealant attachment is completed.

Preferably, the distance $d_1$ is kept constant for a predetermined time from the beginning of the attachment, and after a lapse of the predetermined time the distance $d_2$ is kept constant. The distances $d_1$ and $d_2$ are not necessarily constant as long as they satisfy the relation of $d_1 < d_2$.

The distance $d_1$ is not particularly limited. To more suitably achieve the effects of the present invention, the distance $d_1$ is preferably 0.3 mm or more, more preferably 0.5 mm or more. If the distance $d_1$ is less than 0.3 mm, the tip of the nozzle is too close to the inner peripheral surface of the tire and thus the sealant can easily adhere to the nozzle and the nozzle may need to be cleaned more frequently. The distance $d_1$ is also preferably 2 mm or less, more preferably 1 mm or less. If the distance $d_1$ is more than 2 mm, the effect produced by the formation of a wider portion may not be sufficiently obtained.

The distance $d_2$ is also not particularly limited. To more suitably achieve the effects of the present invention, the distance $d_2$ is preferably 0.3 mm or more, more preferably 1 mm or more, while it is preferably 3 mm or less, more preferably 2 mm or less. The distance $d_2$ is preferably the same as the controlled distance $d_0$ described above.

Herein, the distances $d_1$ and $d_2$ between the inner peripheral surface of the tire and the tip of the nozzle each refer to the distance in the radial direction of the tire between the inner peripheral surface of the tire and the tip of the nozzle.

The rotational speed of the tire during the attachment of the sealant is not particularly limited. To more suitably achieve the effects of the present invention, the rotational speed is preferably 5 m/min or higher, more preferably 10 m/min or higher, while it is preferably 30 m/min or lower, more preferably 20 m/min or lower. If the rotational speed is lower than 5 m/min or higher than 30 m/min, a sealant having a uniform thickness cannot be readily attached.

The self-sealing tire according to the second embodiment can be produced through the steps described above.

Fig. 6 is an explanatory view schematically showing an example of a sealant attached to a self-sealing tire according to the second embodiment.

The generally string-shaped sealant 20 is wound in the circumferential direction of the tire and continuously and spirally attached. Here, one of the longitudinal ends of the sealant 20 forms a wider portion 21 having a larger width than the longitudinally adjoining portion. The wider portion 21 corresponds to the sealant attachment beginning region.

The width of the wider portion of the sealant (the width of the wider portion of the applied sealant, the length indicated by $W_1$ in Fig. 6) is not particularly limited. To more suitably achieve the effects of the present invention, the width of the wider portion is preferably 103% or more, more preferably 110% or more, still more preferably 120% or more of the width of the sealant other than the wider portion (the length indicated by $W_0$ in Fig. 6). If it is less than 103%, the effect produced by the formation of a wider portion may not be sufficiently obtained. The width of the wider portion of the sealant is also preferably 210% or less, more preferably 180% or less, still more preferably 160% or less of the width of the sealant other than the wider portion. If it is more than 210%, the tip of the nozzle needs to be placed excessively close to the inner peripheral surface of the tire to form a wider portion, and thus the sealant can easily adhere to the nozzle and the nozzle may need to be cleaned more frequently. In addition, tire weight balance may be impaired.

Preferably, the width of the wider portion of the sealant is substantially constant in the longitudinal direction, but may partially be substantially not constant. For example, the wider portion may have a shape in which the width is the largest in the attachment beginning region and gradually decreases in the longitudinal direction. The substantially constant width as used herein means that the width varies within a range of 90 to 110%, preferably 97 to 103%, more preferably 98 to 102%, still more preferably 99 to 101%.

The length of the wider portion of the sealant (the length of the wider portion of the applied sealant, the length indicated by $L_1$ in Fig. 6) is not particularly limited. To more suitably achieve the effects of the present invention, the length is preferably less than 650 mm, more preferably less than 500 mm, still more preferably less than 350 mm, particularly preferably less than 200 mm. If the length is 650 mm or more, the tip of the nozzle is placed close to the inner peripheral surface of the tire for a longer period of time, and thus the sealant can easily adhere to the nozzle and the nozzle may need to be cleaned more frequently. In addition, tire weight balance may be impaired. The sealant preferably has a shorter wider portion. However, in view of controlling the distance between the inner peripheral surface of the tire and the tip of the nozzle, the limit of the length of the wider portion is about 10 mm.

The width of the sealant other than the wider portion (the width of the applied sealant other than the wider portion, the length indicated by $W_0$ in Fig. 6) is not particularly limited. To more suitably achieve the effects of the present invention, the width is preferably 0.8 mm or more, more preferably 1.3 mm or more, still more preferably 1.5 mm or more. If the width is less than 0.8 mm, the number of turns of the sealant around the inner periphery of the tire increases, which may result in reduced production efficiency. The width of the sealant other than the wider portion is also preferably 18 mm or less, more preferably 13 mm or less, still more preferably 9.0 mm or less, particularly preferably 7.0 mm or less, most preferably 6.0 mm or less, still most preferably 5.0 mm or less. If the width is more than 18 mm, a weight imbalance may be more likely to occur. $W_0$ is preferably the same as the above-described W.

Preferably, the width of the sealant other than the wider portion is substantially constant in the longitudinal direction, but may partially be substantially not constant.

The width of the region where the sealant is attached (hereinafter also referred to as the width of the attached region or the width of the sealant layer, and corresponding to the length calculated by $W_1 + 6 \times W_0$ in Fig. 6) is not particularly limited. To more suitably achieve the effects of the present invention, the width is preferably 80% or more, more preferably 90% or more, still more preferably 100% or more, but preferably 120% or less, more preferably 110% or less, of the tread contact width.

To more suitably achieve the effects of the present invention, the width of the sealant layer is preferably 85 to 115%, more preferably 95 to 105% of the width of the breaker of the tire (the length of the breaker in the width direction of the tire).

In the self-sealing tire according to the second embodiment, the sealant is preferably attached without overlapping in the width direction, more preferably without gaps.

In the self-sealing tire according to the second embodiment, the other longitudinal end (the end corresponding to the attachment ending region) of the sealant may form a wider portion having a larger width than the longitudinally adjoining portion.

The thickness of the sealant (the thickness of the applied sealant, the thickness of the sealant layer, the length indicated by D in Fig. 8) is not particularly limited. To more suitably achieve the effects of the present invention, the thickness of the sealant is preferably 1.0 mm or more, more preferably 1.5 mm or more, still more preferably 2.0 mm or more, particularly preferably 2.5 mm or more, while it is preferably 10 mm or less, more preferably 8.0 mm or less, still more preferably 5.0 mm or less. If the thickness is less than 1.0 mm, a puncture hole formed in the tire is difficult to reliably seal. Also, a thickness of more than 10 mm is not preferred because tire weight increases though little difference is made in the effect of sealing puncture holes.

The sealant preferably has a substantially constant thickness (thickness of the applied sealant, thickness of the sealant layer) . In this case, deterioration of tire uniformity can be prevented and a self-sealing tire more excellent in weight balance can be produced.

The ratio of the thickness of the sealant (the thickness of the applied sealant, the thickness of the sealant layer, the length indicated by D in Fig. 8) to the width of the sealant other than the wider portion (the width of the applied sealant other than the wider portion, the length indicated by $W_0$ in Fig. 6) [(thickness of sealant)/(width of sealant other than wider portion)] is preferably 0.6 to 1.4, more preferably 0.7 to 1.3, still more preferably 0.8 to 1.2, particularly preferably 0.9 to 1.1. A ratio closer to 1.0 results in a sealant having an ideal string shape, so that a self-sealing tire having high sealing performance can be produced with higher productivity.

To more suitably achieve the effects of the present invention, the cross-sectional area of the sealant (the cross-sectional area of the applied sealant, the area calculated by $D \times W$ in Fig. 8) is preferably 0.8 $mm^2$ or more, more preferably 1.95 $mm^2$ or more, still more preferably 3.0 $mm^2$ or more, particularly preferably 3.75 $mm^2$ or more, while it is preferably 180 $mm^2$ or less, more preferably 104 $mm^2$ or less, still more preferably 45 $mm^2$ or less, particularly preferably 35 $mm^2$ or less, most preferably 25 $mm^2$ or less.

According to the second embodiment, even when the sealant has a viscosity within the range described above, and particularly a relatively high viscosity, widening the sealant corresponding to the attachment beginning region can improve adhesion in the region so that separation of the sealant in the region can be prevented.

The self-sealing tire according to the second embodiment is preferably produced as described above. However, the self-sealing tire may be produced by any other appropriate method as long as at least one of the ends of the sealant is allowed to form a wider portion.

The above description, and particularly the description of the first embodiment explains the case where a non-contact displacement sensor is used in applying the sealant to the inner periphery of the tire. According to the present invention, the sealant may be applied to the inner periphery of the tire while controlling the movement of the nozzle and/or the tire according to the pre-entered coordinate data without measurement using a non-contact displacement sensor.

EXAMPLES

The present invention is specifically described with reference to, but not limited to, examples below.

The chemicals used in the examples are collectively listed below.

Non-halogenated butyl rubber: Butyl 268 (available from Exxon Mobil Corporation, Mooney viscosity $ML_{1+8}$ at 125°C = 51, halogen content: 0% by mass)
Brominated butyl rubber: Bromobutyl 2255 (available from Exxon Mobil Corporation, Mooney viscosity $ML_{1+8}$ at 125°C = 46, halogen content: 2.0% by mass)
Liquid polybutene: Nisseki polybutene HV300 (available from JX Nippon Oil & Energy Corporation, kinematic viscosity at 40°C: 26,000 $mm^2/s$, kinematic viscosity at 100°C: 590 $mm^2/s$, number average molecular weight: 1,400)
Carbon black: N330 (available from Cabot Japan K. K., HAF grade, DBP oil absorption: 102 ml/100 g)
Plasticizer: DOP (dioctyl phthalate, available from Showa Chemical, specific gravity: 0.96, viscosity: 81 mPs·s)
Crosslinking activator: VULNOC GM (available from Ouchi Shinko Chemical Industrial Co., Ltd., p-benzoquinone dioxime)
Crosslinking agent: NYPER NS (available from NOF Corporation, dibenzoyl peroxide (40% dilution, dibenzoyl peroxide: 40%, dibutyl phthalate: 48%), the amounts shown in Table 1 are the amounts of net benzoyl peroxide)

<Production of self-sealing tire>

According to the formulations in Table 1, the chemicals were introduced to a twin screw kneading extruder as follows: the butyl rubber, carbon black, and crosslinking activator were introduced from an upstream supply port; the liquid polybutene was introduced from a midstream supply port; and the plasticizer and crosslinking agent were introduced from a downstream supply port. They were kneaded at a barrel temperature of 100°C, a screw rotational speed of 200 rpm, and a pressure of 5.0 MPa to prepare a sealant. The liquid polybutene was heated to 50°C before being introduced from the supply port.

(Time for kneading materials)

Time for mixing butyl rubber, carbon black, and crosslinking activator: 2 minutes
Time for mixing liquid polybutene: 2 minutes
Time for mixing plasticizer and crosslinking agent: 1.5 minutes

Next, the tip of a nozzle directly connected to the outlet of the twin screw kneading extruder was placed around the inner surface of a tire and the sealant (temperature: 100°C, viscosity at 40°C: 20,000 Pa·s, generally string shape) prepared sequentially as above was discharged from the nozzle to the inner surface of the tire (preheated at 40°C) rotating in the circumferential direction, whereby the sealant was continuously and spirally applied to the inner periphery of the tire as shown in Fig. 1 to Fig. 4 to prepare a self-sealing tire.

The viscosity at 40°C of the sealant was measured at 40°C in conformity with JIS K 6833-1:2008 using a rotational viscometer.

Moreover, the viscosity of the sealant was measured under the condition below. The maximum shear viscosity was taken as the viscosity at the particular temperature (0°C or 95°C).

<Measurement conditions >

Device for measurement: rheometer MCR52 available from Anton Paar Japan K.K.
Measurement mode: Steady flow shear viscosity

Measurement temperature: 0°C or 95°C
Measurement time: 15 seconds
Measurement strain: 0% to 10,000%
Shear rate: 6 (1/s)
Preheating time: 1 minute after insertion between plates heated at a set temperature
Rotor shape: Circular plate
Gap: 1 mm, distance between plates, no extruded sealant

1. Sealing performance evaluation

The sealant was applied at a thickness of 3 mm to the inner surface of a vulcanized 195/65R15 tire (entirely in the circumferential direction, and from one breaker edge to the other breaker edge in the width direction). The tire filled with air at an internal pressure of 230 kPa was penetrated by a nail with a diameter of 4 mm and a length of 50 mm. Three hours later, the nail was pulled out and immediately the internal pressure of the tire was measured. The sealing performance (air sealing performance) of each example is expressed as an index relative to Comparative Example 1 according to the equation below. A higher sealing performance index indicates a smaller reduction in internal pressure, which in turn indicates that the sealant has excellent sealing performance (air sealing performance).

(Sealing performance index) = (Internal pressure of each example)/(Internal pressure of Comparative Example 1) × 100

2. Fluidity evaluation

The sealant (temperature: 100°C, viscosity at 40°C: 20,000 Pa·s, generally string shape) was applied at a thickness of 3 mm to the inner surface of a vulcanized 195/65R15 tire (entirely in the circumferential direction, and from one breaker edge to the other breaker edge in the width direction) . After running of the tire with an internal pressure of 230 kPa at 80 km/h, the moving distance of the sealant at the breaker edges was measured. The fluidity (initial fluidity) of each example is expressed as an index relative to Comparative Example 1 according to the equation below. A higher fluidity index indicates a shorter moving distance, which in turn indicates that the sealant has excellent fluidity (initial fluidity).

(Fluidity index) = (Moving distance of Comparative Example 1)/(Moving distance of each example) × 100

[Table 1]

| | | Example | | | | | | Comparative Example |
|---|---|---|---|---|---|---|---|---|
| | | 1 | 2 | 3 | 4 | 5 | 6 | 1 |
| Formulation (parts by mass) | Non-halogenated butyl rubber | 100 | 100 | 100 | - | - | - | 100 |
| | Brominated butyl rubber | - | - | - | 100 | 100 | 100 | - |
| | Liquid polybutene | 250 | 200 | 250 | 200 | 250 | 200 | 100 |
| | Carbon black | 10 | 10 | 10 | 10 | 10 | 10 | 50 |
| | Plasticizer | 10 | 10 | 10 | 10 | 10 | 10 | 5 |
| | Crosslinking activator | 5 | 5 | 10 | 5 | 10 | 10 | 20 |
| | Crosslinking agent | 5 | 5 | 10 | 5 | 10 | 10 | 20 |
| Viscosity | Viscosity 0°C (kPa·s) | 20 | 80 | 20 | 80 | 30 | 80 | 100 |
| | Viscosity 95°C (kPa·s) | 1 | 5 | 10 | 8 | 13 | 15 | 0.5 |
| Evaluation | Sealing performance | 130 | 102 | 130 | 102 | 128 | 102 | 100 |
| | Fluidity | 102 | 105 | 130 | 110 | 135 | 140 | 100 |

The sealants of the examples having viscosities at 0°C and 95°C within the respective predetermined ranges had a good balance of excellent sealing performance and excellent fluidity.

REFERENCE SIGNS LIST

10 Tire
11 Inner periphery of tire
14 Tread portion
15 Carcass
16 Breaker
17 Band
20 Sealant
21 Wider portion
30 Nozzle
31 Tip of nozzle
40 Non-contact displacement sensor
50 Rotary drive device
60 Twin screw kneading extruder
61 (61a, 61b, 61c) Supply port
62 Material feeder
d, $d_0$, $d_1$, $d_2$ Distance between inner peripheral surface of tire and tip of nozzle

## Claims

1. A rubber composition for pneumatic tires, having a viscosity at 0°C of 16 to 80 kPa·s and a viscosity at 95°C of 1 to 15 kPa·s, wherein the viscosity at 0 °C and at 95 °C is measured with a rheometer MCR 52 available from Anton Paar Japan K.K. with a measurement mode of steady flow shear viscosity at 0 °C and 95 °C, respectively, for 15 seconds using a measurement strain of 0 % to 10,000 % with a shear rate of 6 (1/s), with a preheating time of one minute after an insertion between plates heated at a set temperature using a circular plate as rotor shape and adjusting an 1 mm distance between plates using no extruded sealant.

2. The rubber composition for pneumatic tires according to claim 1,
wherein an absolute value of a difference between the viscosity at 0°C and the viscosity at 95°C is 1 to 79 kPa·s,

3. The rubber composition for pneumatic tires according to claim 1 or 2, which comprises a rubber component including a butyl-based rubber and an organic peroxide.

4. The rubber composition for pneumatic tires according to claim 3,
wherein an amount of the butyl-based rubber based on 100% by mass of the rubber component is 80% by mass or more.

5. The rubber composition for pneumatic tires according to claim 3 or 4,
wherein the rubber composition comprises, relative to 100 parts by mass of the rubber component, 1 to 40 parts by mass of the organic peroxide and 1 to 40 parts by mass of a crosslinking activator.

6. The rubber composition for pneumatic tires according to claim 5,
wherein the crosslinking activator is a quinone dioxime compound.

7. The rubber composition for pneumatic tires according to any one of claims 3 to 6,
wherein the butyl-based rubber is a halogenated butyl rubber.

8. The rubber composition for pneumatic tires according to claim 7,
wherein the halogenated butyl rubber is brominated butyl rubber.

9. The rubber composition for pneumatic tires according to any one of claims 3 to 8, which comprises 100 to 400 parts by mass of a liquid polymer relative to 100 parts by mass of the rubber component.

10. The rubber composition for pneumatic tires according to claim 9, wherein the liquid polymer is liquid polybutene.

11. A pneumatic tire, comprising a sealant layer formed from the rubber composition according to any one of claims 1 to 10.

## Patentansprüche

1. Kautschukzusammensetzung für Luftreifen mit einer Viskosität bei 0 °C von 16 bis 80 kPa•s und einer Viskosität bei 95° C von 1 bis 15 kPa•S, wobei die Viskosität gemessen wird bei 0 °C und bei 95 °C mit einem Rheometer MCR 52, das von Anton Paar Japan K.K. erhältlich ist, mit einem Messmodus einer stationären Scherviskosität (steady flow shear viscosity) bei 0 °C bzw. 95 °C für 15 Sekunden unter Verwendung einer Messdehnung von 0 % bis 10 000 % mit einer Scherrate von 6 (1/s), mit einer Vorwärmzeit von einer Minute nach einem Einsetzen zwischen Platten, die unter Verwendung einer kreisförmigen Platte als Rotorform auf eine Solltemperatur erwärmt worden sind, und Einstellen eines Abstandes von 1 mm zwischen den Platten ohne Verwendung eines extrudierten Dichtmittels.

2. Kautschukzusammensetzung für Luftreifen nach Anspruch 1, wobei ein Absolutwert einer Differenz zwischen der Viskosität bei 0 °C und der Viskosität bei 95 °C 1 bis 79 kPa•s beträgt.

3. Kautschukzusammensetzung für Luftreifen nach Anspruch 1 oder 2, die eine Kautschukkomponente umfasst, die einen butylbasierten Kautschuk und ein organisches Peroxid enthält.

4. Kautschukzusammensetzung für Luftreifen nach Anspruch 3, wobei eine Menge des butylbasierten Kautschuks auf der Basis von 100 Masse-% der Kautschukkomponente 80 Masse-% oder mehr beträgt.

5. Kautschukzusammensetzung für Luftreifen nach Anspruch 3 oder 4, wobei die Kautschukzusammensetzung bezogen auf 100 Masseteile der Kautschukkomponente 1 bis 40 Masseteile des organischen Peroxids und 1 bis 40 Masseteile eines Vernetzungsaktivators umfasst.

6. Kautschukzusammensetzung für Luftreifen nach Anspruch 5, wobei der Vernetzungsaktivator eine Chinondioximverbindung ist.

7. Kautschukzusammensetzung für Luftreifen nach einem der Ansprüche 3 bis 6, wobei der butylbasierte Kautschuk ein halogenierter Butylkautschuk ist.

8. Kautschukzusammensetzung für Luftreifen nach Anspruch 7, wobei der halogenierte Butylkautschuk bromierter Butylkautschuk ist.

9. Kautschukzusammensetzung für Luftreifen nach einem der Ansprüche 3 bis 8, die 100 bis 400 Masseteile eines flüssigen Polymers bezogen auf 100 Masseteile der Kautschukkomponente umfasst.

10. Kautschukzusammensetzung für Luftreifen nach Anspruch 9, wobei das flüssige Polymer flüssiges Polybuten ist.

11. Luftreifen, der eine Dichtmittelschicht umfasst, die aus der Kautschukzusammensetzung nach einem der Ansprüche 1 bis 10 gebildet ist.

## Revendications

1. Composition de caoutchouc pour bandages pneumatiques, ayant une viscosité à 0° C de 16 à 80 kPa·s et une viscosité à 95° C de 1 à 15 kPa·s, dans laquelle la viscosité à 0° C et à 95° C est mesurée avec un rhéomètre MCR 52 disponible auprès de Anton Paar Japan K.K. Avec un mode de mesure de viscosité par cisaillement en flux permanent à 0° C et 95° C, respectivement, pendant 15 secondes en utilisant une contrainte de mesure de 0 % à 10 000 % avec un taux de cisaillement de 6 (1/s), avec un temps de préchauffage d'une minute après une insertion entre des plaques chauffées à une température donnée utilisant une plaque circulaire à titre de forme de rotor et en ajustant une distance de 1 mm entre des plaques sans utiliser de produit d'étanchement extrudé.

**2.** Composition de caoutchouc pour bandages pneumatiques selon la revendication 1, dans laquelle une valeur absolue d'une différence entre la viscosité à 0° C et la viscosité à 95° C est de 1 à 79 kPa·s.

**3.** Composition de caoutchouc pour bandages pneumatiques selon la revendication 1 ou 2, qui comprend un composant de caoutchouc incluant un caoutchouc à base de butyle et un peroxyde organique.

**4.** Composition de caoutchouc pour bandages pneumatiques selon la revendication 3, dans laquelle une quantité du caoutchouc à base de butyle, basée sur 100 % en masse du composant de caoutchouc, est de 80 % en masse ou plus.

**5.** Composition de caoutchouc pour bandages pneumatiques selon la revendication 3 ou 4, dans laquelle la composition de caoutchouc comprend, en relation à 100 parties en masse du composant de caoutchouc, de 1 à 40 parties en masse du peroxyde organique et de 1 à 40 parties en masse d'un activateur de réticulation.

**6.** Composition de caoutchouc pour bandages pneumatiques selon la revendication 5, dans laquelle l'activateur de réticulation est un composé de quinone dioxime.

**7.** Composition de caoutchouc pour bandages pneumatiques selon l'une quelconque des revendications 3 6, dans laquelle le caoutchouc à base de butyle est un caoutchouc au butyle halogéné.

**8.** Composition de caoutchouc pour bandages pneumatiques selon la revendication 7, dans lequel le caoutchouc au butyle halogéné est un caoutchouc au butyle bromé.

**9.** Composition de caoutchouc pour bandages pneumatiques selon l'une quelconque des revendications 3 à 8, qui comprend de 100 à 400 parties en masse d'un polymère liquide en relation à 100 parties en masse du composant de caoutchouc.

**10.** Composition de caoutchouc pour bandages pneumatiques selon la revendication 9, dans laquelle le polymère liquide est un polybutène liquide.

**11.** Bandage pneumatique, comprenant une couche d'étanchéité formée à partir de la composition de caoutchouc selon l'une quelconque des revendications 1 à 10.

FIG.1

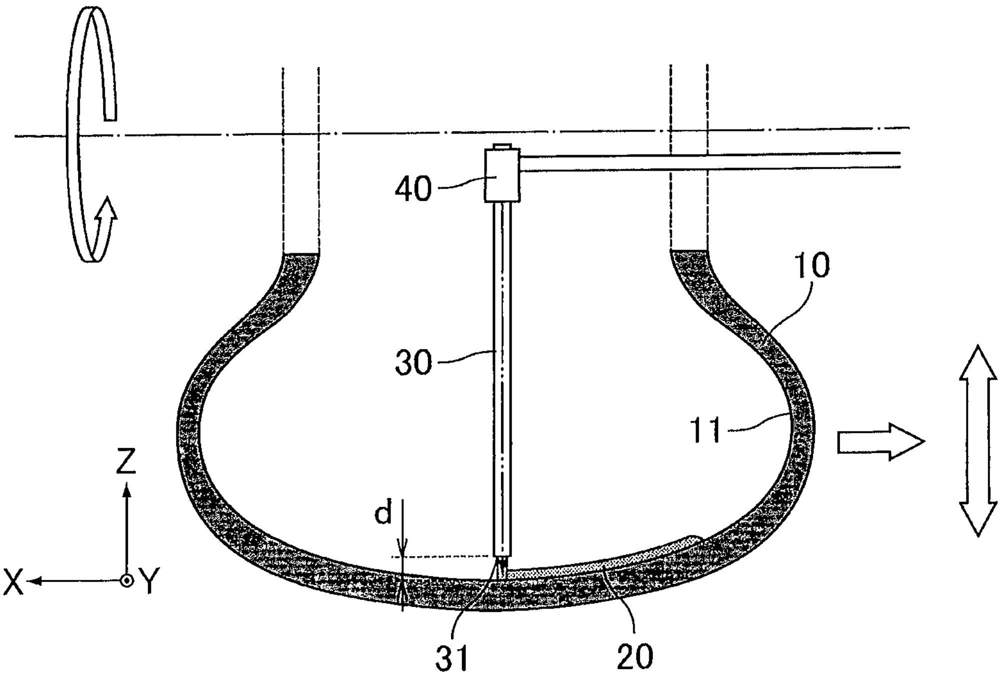


FIG.2

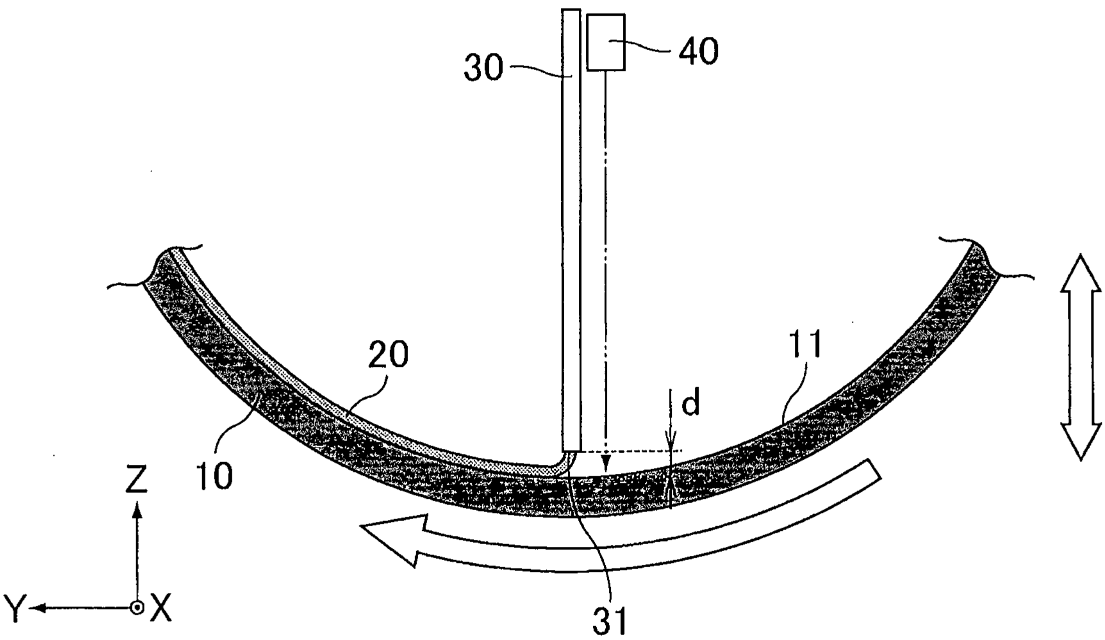

FIG.3

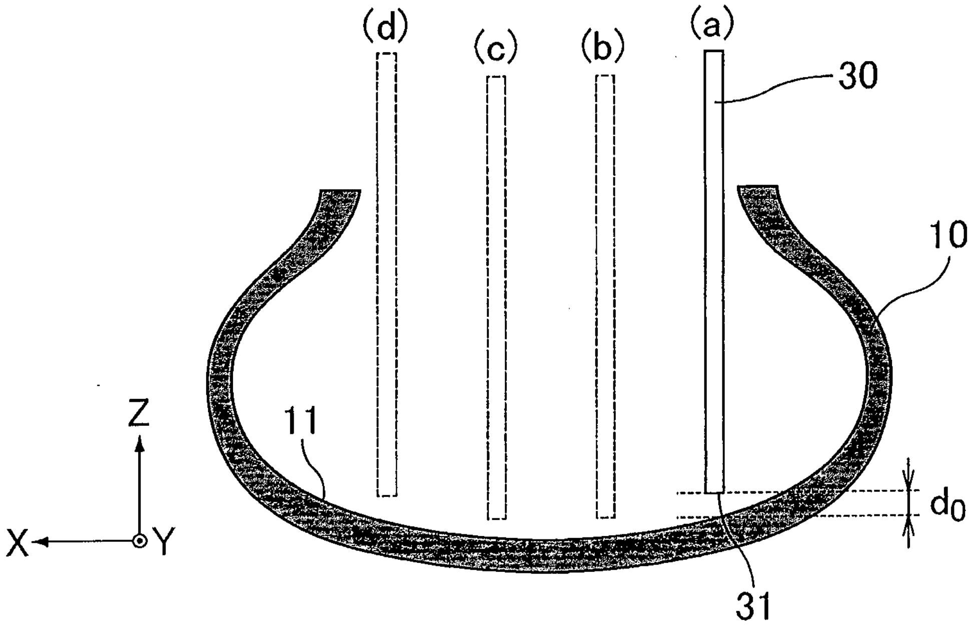


FIG.4

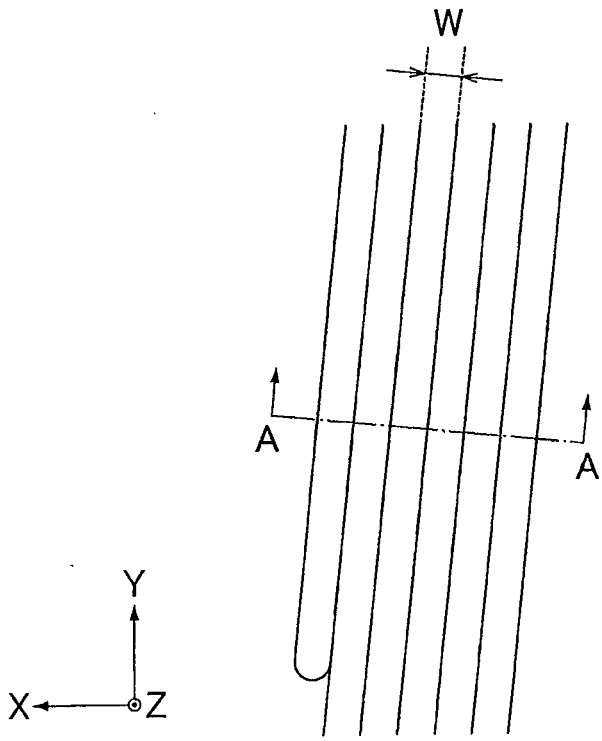

FIG.5

(a)

(b)

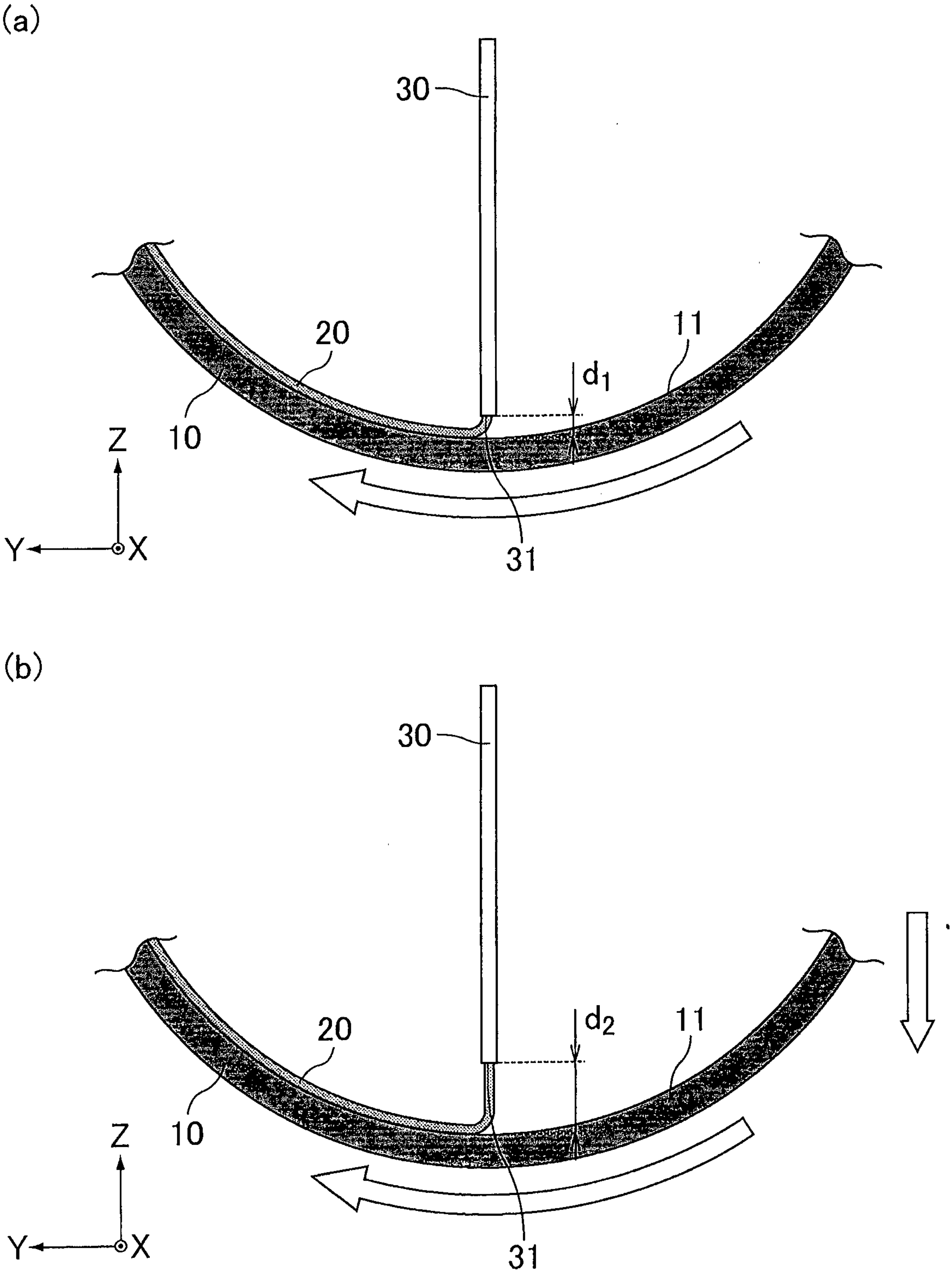

FIG.6

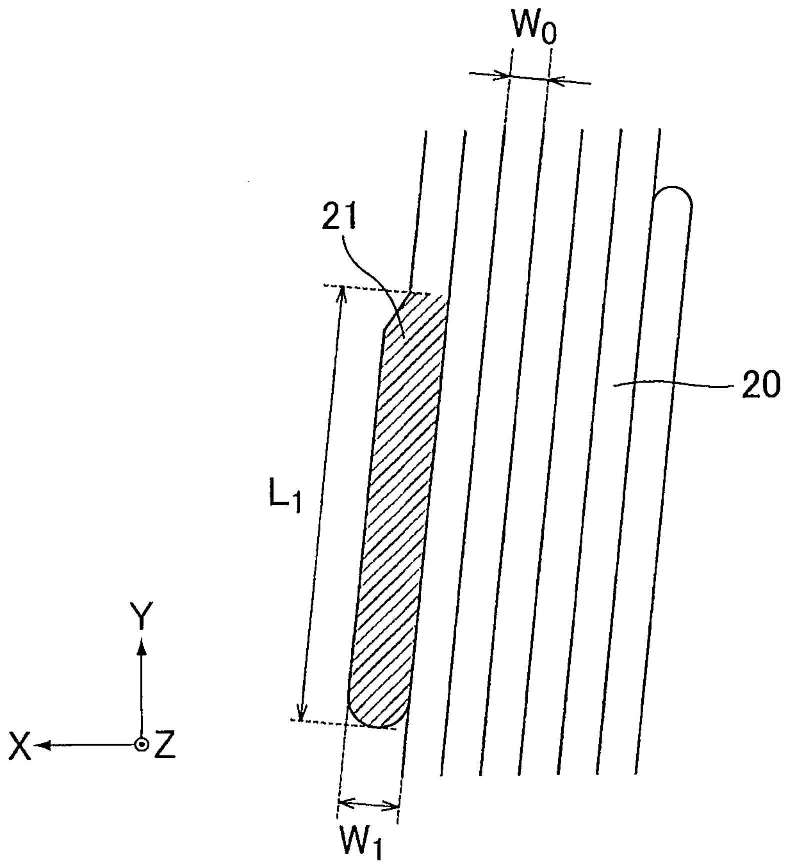

FIG.7

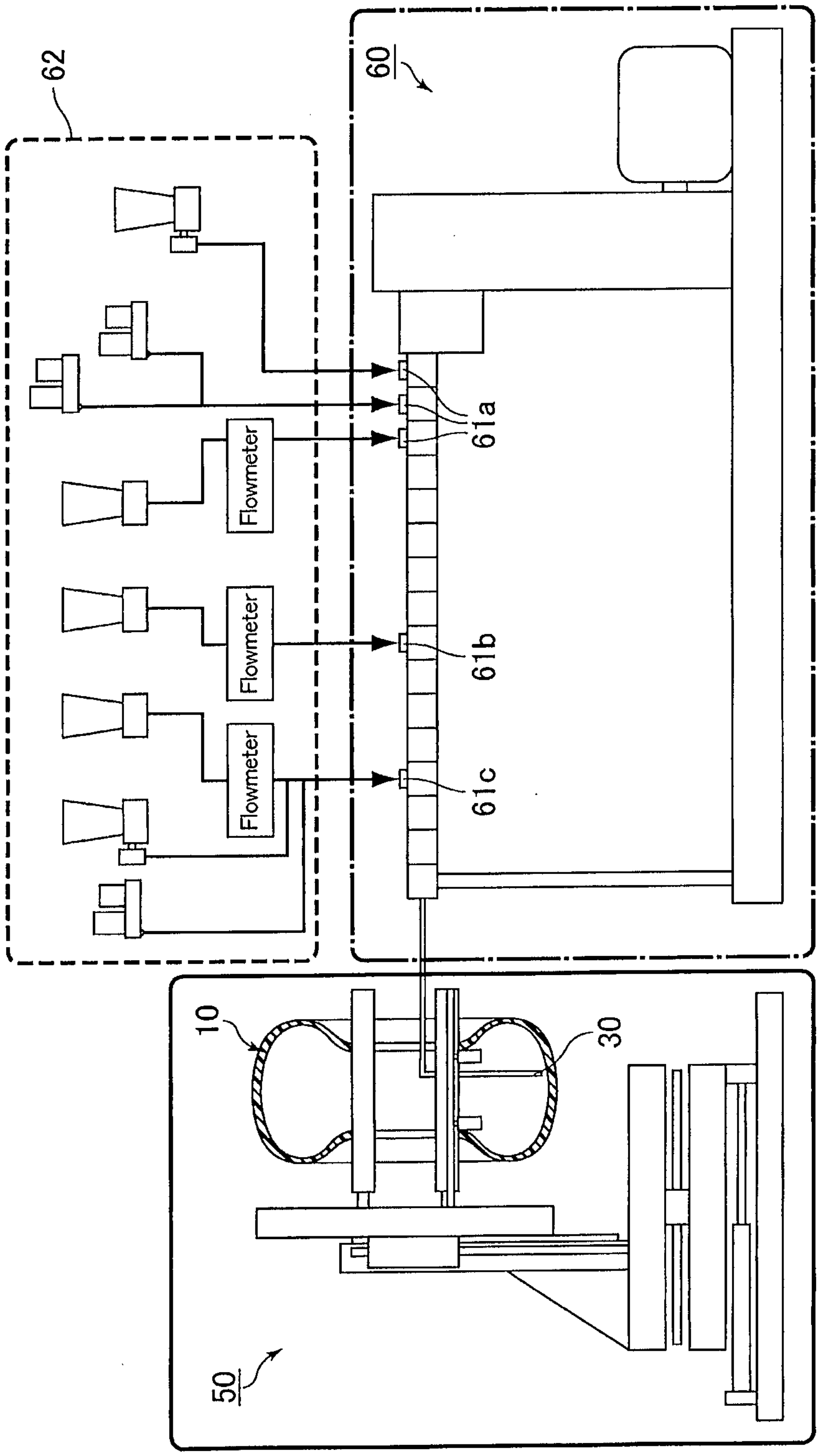

FIG.8

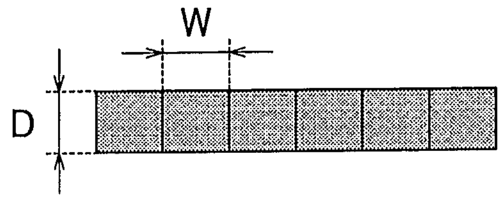


FIG.9

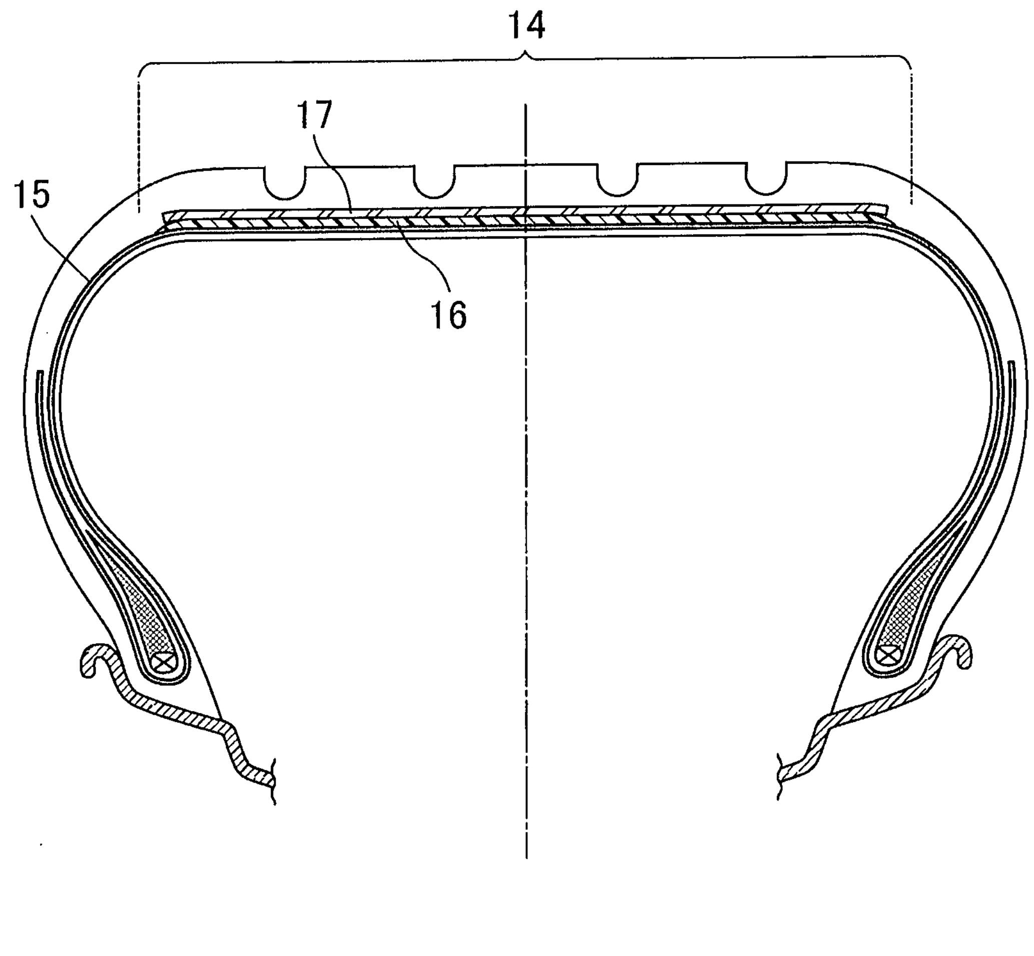

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010528131 T
- JP 2001018609 A